# EUROPÄISCHE PATENTSCHRIFT

(11) **EP 4 522 547 B1**
(45) Veröffentlichungstag und Bekanntmachung des Hinweises auf die Patenterteilung: **13.08.2025**
(21) Anmeldenummer: 23732344.9
(22) Anmeldetag: 13.06.2023
(51) Int. Cl.: B66C 23/80

(54) **VERFAHREN ZUM VERÄNDERN DES VERTIKALEN AUSHEBEZUSTANDES**
METHOD FOR CHANGING A VERTICAL LIFTED-OUT STATE
PROCÉDÉ DE MODIFICATION D'UN ÉTAT RELEVÉ VERTICAL

(30) Priorität: 17.06.2022 AT 5009922 U
(43) Veröffentlichungstag der Anmeldung: 19.03.2025
(73) Patentinhaber: Palfinger AG, 5101 Bergheim bei Salzburg (AT)
(72) Erfinder: PETRONIJEVIC, Boban, 5300 Hallwang (AT); JUDS, Benjamin, 5020 Salzburg (AT); EMMINGER, Werner, 5221 Lochen (AT); GSCHAIDER, Friedrich, 5112 Lamprechtshausen (AT)
(74) Vertreter: Torggler & Hofmann Patentanwälte - Innsbruck
(86) Internationale Anmeldenummer: PCT/AT2023/060186
(87) Internationale Veröffentlichungsnummer: WO 2023/240302

(56) Entgegenhaltungen:
- DE-A1- 102007 030 107
- JP-A- H11 171 477
- KR-B1- 101 298 616
- US-A- 5 580 095
- US-B1- 6 619 693

## Beschreibung

Die vorliegende Erfindung betrifft ein Verfahren zum Verändern des vertikalen Aushebezustandes eines auf einem Untergrund abgestellten Trägerfahrzeugs für eine Hebevorrichtung mit einem Abstützsystem gemäß dem Oberbegriff des Anspruchs 1, ein Computerprogrammprodukt zur Ausführung eines solchen Verfahrens, eine Steuerung für ein Abstützsystem zur Durchführung eines solchen Verfahrens und ein Fahrzeug mit einer solchen Steuerung.

Im Stand der Technik ist bekannt, dass Trägerfahrzeuge mit Abstützsystemen auf einem Untergrund abgestützt werden, beispielsweise zur Erhöhung der Standsicherheit des Trägerfahrzeugs. Die Abstützung erfolgt gewöhnlich über in ihrer Längserstreckung verstellbare Stützbeine, die sich auf dem Untergrund abstützen können und durch Veränderung der Längserstreckung die Neigung und den Aushebezustand des Trägerfahrzeugs beeinflussen können. Mit einem Neigungssensor kann eine Neigung des Trägerfahrzeugs und/oder der Hebevorrichtung relativ zu einer vorgegebenen oder vorgebbaren Raumrichtung und/oder Raumebene erfasst werden.

Im Stand der Technik sind Vorrichtungen in Form von hydraulisch betätigbaren Abstützsystemen zum Verändern des vertikalen Aushebezustandes bekannt. Bei Hebevorrichtungen wie etwa Hebebühnen eingesetzte Systeme weisen zum gesteuerten Verändern des vertikalen Aushebezustandes Druckwaagen zur Steuerung von Volumenströmen für hydraulische Antriebe auf. Damit kann bei einem gleichzeitigen Ansteuern mehrerer Antriebe von Stützbeinen unabhängig von unterschiedlichen Belastungen der Stützbeine der gleiche Volumenstrom an jeden Antrieb verteilt werden. Damit kann ein synchrones und gleichartiges Ein- und Ausfahren der Stützbeine erfolgen.

Nachteilig an Vorrichtungen zum Verändern des vertikalen Aushebezustandes unter der Verwendung von Druckwaagen ist die damit einhergehende höhere Komplexität des Hydrauliksystems. Zusätzliche Druckventile, Messvorrichtungen für an Ventilen anliegende Drücke und Proportional- oder Regelventile zur Steuerung der Volumenströme erhöhen die Fehleranfälligkeit und den Wartungsaufwand solcher Hydrauliksysteme.

Aus der DE 10 2007 030107 A1 ist ein Verfahren zum elektrohydraulischen Ausrichten von sich im Stillstand befindenden Tragkörpern von Fahrzeugen oder Fahrzeugaufbauten bekannt.

Aus der US 6 619 693 B1 ist eine Vorrichtung zum automatischen Ausrichten eines Fahrzeugs bekannt.

Aufgabe der Erfindung ist es, ein gegenüber dem Stand der Technik verbessertes Verfahren zum Verändern des vertikalen Aushebezustandes eines Trägerfahrzeugs für eine Hebevorrichtung anzugeben.

Die Aufgabe wird von einem Verfahren gemäß Anspruch 1, einem Computerprogrammprodukt zur Ausführung eines solchen Verfahrens und einer Steuerung, welche zur Durchführung eines solchen Verfahrens ausgebildet ist, gelöst.

Vorteilhafte Ausführungen sind in den abhängigen Ansprüchen definiert.

Das Verfahren dient dem Verändern des vertikalen Aushebezustandes eines Trägerfahrzeugs für eine Hebevorrichtung mit einem Abstützsystem auf einem Untergrund. Durch ein Abstützsystem kann beispielsweise eine Erhöhung der Standsicherheit des Trägerfahrzeugs erreicht werden und das Trägerfahrzeug relativ zu einem Untergrund angehoben werden oder zu diesem hin abgesenkt werden. Es soll nicht ausgeschlossen sein, dass ein Trägerfahrzeug für eine Hebevorrichtung mit einem Abstützsystem zu einer vorgegebenen oder vorgebbaren Raumrichtung und/oder Raumebene ausgerichtet werden kann.

Eine vorgegebene oder vorgebbare Raumebene kann beispielsweise eine horizontale Ebene sein.

Ein vertikaler Aushebezustand eines Trägerfahrzeugs für eine Hebevorrichtung kann auf einen vertikalen Abstand, insbesondere entlang einer Vertikalen gemessen, eines Rahmens oder eines Referenzpunkts am Rahmen des Trägerfahrzeugs zur Oberfläche eines zur Abstützung verwendeten Untergrundes bezogen sein. Ebenso kann ein vertikaler Aushebezustand, insbesondere entlang einer Vertikalen gemessen, auf eine auf einem Trägerfahrzeug angeordnete Hebevorrichtung, etwa einen Kransockel oder eine Kransäule einer Hebevorrichtung, bezogen sein.

Eine erfasste Neigung kann beispielsweise ein Winkel einer im Wesentlichen vertikal verlaufenden Schwenkachse einer Kransäule einer Hebevorrichtung zu einer horizontalen Ebene, Raumebene oder Raumrichtung sein.

In einem abgestellten Zustand kann eine Ausrichtung mit einem zumindest annähernd rechten Winkel der Schwenkachse der Kransäule zur Horizontalen angestrebt werden.

Insbesondere kann auf die Horizontale bezogen eine Neigung zwischen 0° und 3° gegenüber der Horizontalen angestrebt werden.

Die Abstützung erfolgt gewöhnlich über in ihrer Längserstreckung verstellbare Stützbeine, die sich auf dem Untergrund abstützen können und durch Veränderung der Längserstreckung den vertikalen Aushebezustand und die Neigung des Trägerfahrzeugs und/oder der Hebevorrichtung beeinflussen können.

Unter einer momentanen Neigung kann grundsätzlich eine gegenwärtig, also im Moment der Durchführung eines Verfahrensschritts, vorherrschende Neigung des Trägerfahrzeugs und/oder der Hebevorrichtung verstanden werden.

Eine momentane Neigung des Trägerfahrzeugs und/oder der Hebevorrichtung kann durch ein Abstellen auf einem geneigten Untergrund vorliegen. Eine momentane Neigung kann auch durch eine Zuladung des Trägerfahrzeugs oder eine Belastung einer auf dem Trägerfahrzeug angeordneten Hebevorrichtung bedingt sein.

Das Abstützsystem kann mit dem Fahrzeugrahmen verbunden sein. Weist das Trägerfahrzeug eine Hebevorrichtung auf, kann das Abstützsystem mit der Hebevorrichtung verbunden sein. Die Hebevorrichtung selbst kann ebenso Stützbeine aufweisen.

Das Abstützsystem kann zwei oder mehrere Stützbeine aufweisen. Die Stützbeine können an unterschiedlichen Positionen relativ zum Trägerfahrzeug oder der Hebevorrichtung angeordnet sein.

Insbesondere kann das Abstützsystem vier Stützbeine aufweisen, die Teil einer sogenannten H-Abstützung (H-förmige Anordnung der Stützbeine) oder einer X-Abstützung (X-förmige Anordnung, auch Stern-Abstützung genannt) sein können.

Das Abstützsystem kann eine Steuerung zur Ansteuerung von Antrieben der Stützbeine mit Steuerbefehlen aufweisen. Beispielsweise können die Stützbeine Antriebe in Form von Hydraulikzylindern zum Ein- und/oder Ausfahren der Stützbeine aufweisen, und die Steuerung kann magnetisch betätigbare Steuerventile der Hydraulikzylinder mit Steuerpulsen ansteuern. Eine entsprechende Ansteuerung von elektrischen Antrieben soll nicht ausgeschlossen sein.

Die Steuerung kann eine Benutzerschnittstelle aufweisen. Eine Benutzerschnittstelle einer Steuerung kann allgemein als ein Bedienelement der Steuerung, etwa als ein Hebel, ein Knopf oder ein Feld auf einer berührempfindlichen Anzeige, insbesondere auf einer mobilen Fernsteuerung der Steuerung der Hebevorrichtung, ausgeführt sein. Eine Benutzerschnittstelle einer Steuerung kann allgemein als eine Schnittstelle zum Datenaustausch ausgebildet sein.

Steuerbefehle für die Antriebe können von einem Benutzer durch Abgabe von Bedienbefehlen über eine Benutzerschnittstelle der Steuerung generiert werden. Solche Bedienbefehle können auch eine Durchführung des Verfahrens initiieren.

Bei dem Verfahren können Steuerbefehle generiert und zumindest teilautomatisiert an die Antriebe ausgegeben werden.

Es soll nicht ausgeschlossen sein, dass das Abstützsystem horizontal verstellbare Stützarme, an denen die Stützbeine angeordnet sind, aufweist. Auch soll nicht ausgeschlossen sein, dass die Steuerung zur Ansteuerung von Antrieben der Stützarme mit Steuerbefehlen ausgebildet ist.

Das Abstützsystem kann zumindest einen Neigungssensor zur Erfassung einer Neigung des Trägerfahrzeugs und/oder der Hebevorrichtung relativ zu zumindest einer vorgegebenen oder vorgebbaren Raumrichtung und/oder Raumebene aufweisen.

Beispielsweise kann die Neigung des Trägerfahrzeugs und/oder der Hebevorrichtung relativ zu zwei Raumrichtungen erfasst werden.

Insbesondere können Neigungen relativ zu zwei Raumrichtungen, die eine horizontale Ebene aufspannen, erfasst werden.

Es kann beispielsweise eine Neigung um eine Querachse und/oder um eine Längsachse eines Trägerfahrzeugs, beispielsweise auf einen Rahmen des Trägerfahrzeugs bezogen, erfasst werden. Die erfasste Neigung kann beispielsweise auf eine horizontale Ausrichtung des Trägerfahrzeugs bezogen sein.

Es kann beispielsweise eine Neigung einer auf einem Trägerfahrzeug angeordneten Hebevorrichtung, insbesondere einer Kransäule einer Hebevorrichtung relativ zu zumindest einer Raumrichtung in einer horizontalen und/oder vertikalen Ebene, erfasst werden.

Eine erfasste Neigung kann beispielsweise ein Winkel einer im Wesentlichen vertikal verlaufenden Schwenkachse einer Kransäule einer Hebevorrichtung zu einer horizontalen Ebene, Raumebene oder Raumrichtung sein. Zur Ausrichtung kann ein zumindest annähernd rechter Winkel der Schwenkachse der Kransäule zur Horizontalen angestrebt werden.

Das Abstützsystem kann zumindest einen Abstandssensor zur Erfassung eines Abstandes des Trägerfahrzeugs und/oder der Hebevorrichtung relativ zu einem zur Abstützung verwendeten Untergrund aufweisen, wodurch sich der vertikale Aushebezustand charakterisieren lassen kann. Abstandssensoren können in Form von Wegmesseinrichtungen oder Einrichtungen zur Laufzeitmessung von Signalen wie optischen, allgemein elektromagnetischen oder akustischen Entfernungsmessern ausgebildet sein.

Die erfasste Neigung und/oder der erfasste Abstand können der Steuerung zugeführt und in Berechnungen einbezogen werden.

In dem Verfahren kann in wenigstens einem Berechnungs-Verfahrensschritt eine Abfolge an Steuerbefehlen zur sequentiellen und zeitlich begrenzten Ansteuerung einzelner Antriebe der Stützbeine des Abstützsystems berechnet werden.

Die Berechnung der Steuerbefehle kann mit der Anforderung erfolgen, dass mit dem Abstützsystem ein Verändern des vertikalen Aushebezustandes des Trägerfahrzeugs im Wesentlichen unter Beibehaltung der momentanen, also beispielsweise gegenwärtig bei Durchführung eines Verfahrensschrittes vorherrschenden, Neigung des Trägerfahrzeugs und/oder der Hebevorrichtung erfolgt. Die Neigung des Trägerfahrzeugs kann dabei innerhalb eines vorgebbaren oder vorgegebenen Bereichs für eine Neigungsabweichung variieren, bleibt aber beim Verändern des vertikalen Aushebezustandes des Trägerfahrzeugs im Wesentlichen gleich.

Die Berechnung der Steuerbefehle kann derart erfolgen, dass durch die Ausführung der Steuerbefehle in einem bestimmten Maß ein Anheben und/oder Absenken des Trägerfahrzeugs und gegebenenfalls einer darauf angeordneten Hebevorrichtung erreichbar ist, wobei sich beim Anheben und/oder Absenken die momentane Neigung des Trägerfahrzeugs und gegebenenfalls einer darauf angeordneten Hebevorrichtung nur innerhalb eines vorgebbaren oder vorgegebenen Bereichs für eine Neigungsabweichung ändert.

Als momentane Neigung des Trägerfahrzeugs und/oder der Hebevorrichtung kann die unmittelbar vor oder bei Durchführung des Berechnungs-Verfahrensschritts vorherrschende Neigung des Trägerfahrzeugs und/oder der Hebevorrichtung verstanden werden.

In wenigstens einem Aushebe-Verfahrensschritt kann grundsätzlich eine Ansteuerung der Antriebe der Stützbeine des Abstützsystems zur Veränderung des vertikalen Aushebezustandes des Trägerfahrzeugs und/oder der Hebevorrichtung erfolgen. Bei Ausführung eines Aushebe-Verfahrensschritt kann der vertikale Aushebezustand des Trägerfahrzeugs und/oder der Hebevorrichtung zumindest teilweise verringert oder vergrößert werden.

Bei Ansteuerung der Antriebe der Stützbeine des Abstützsystems mit der Abfolge an Steuerbefehlen kann eine sequentielle und zeitlich begrenzte Ansteuerung einzelner Antriebe der Stützbeine des Abstützsystems mit Steuerpulsen erfolgen.

Es können einzelne Antriebe der Stützbeine im Wesentlichen zeitlich getrennt voneinander in einer Abfolge oder Sequenz angesteuert werden.

Die Ansteuerung der Antriebe kann mit von der Steuerung sequentiell ausgegebenen und zeitlich begrenzten Steuerpulsen erfolgen.

Eine Aktivierung eines Antriebs eines Stützbeins kann grundsätzlich für die zeitliche Dauer eines Steuerpulses erfolgen.

Durch das Verfahren kann eine Veränderung des Aushebezustands eines auf einem Untergrund abgestellten Trägerfahrzeugs für eine Hebevorrichtung mit einem Abstützsystem anstelle einer getakteten, also einer zeitlich bemessenen, fortlaufenden und ggf. gleichzeitigen Ansteuerung der Stützbeine in eine sequentielle Abfolge einer Vielzahl an Steuerpulsen mit jeweils begrenzter Zeitdauer zerlegt werden.

Durch die Ansteuerung der Antriebe mit von der Steuerung sequentiell ausgegebenen und zeitlich begrenzten Steuerpulsen kann ein vertikaler Aushebezustand des Trägerfahrzeugs und/oder der Hebevorrichtung inkrementell verringert oder vergrößert werden.

In einem Berechnungs-Verfahrensschritt kann vorteilhaft eine Berechnung der Abfolge an Steuerbefehlen auf Basis von wenigstens einem Parameter des Abstützsystems erfolgen.

Dabei kann mit zumindest einem Neigungssensor des Abstützsystems zur Erfassung einer Neigung des Trägerfahrzeugs und/oder der Hebevorrichtung relativ zu zumindest einer vorgegebenen oder vorgebbaren Raumrichtung und/oder Raumebene eine Erfassung einer momentanen Neigung als ein Parameter des Abstützsystems erfolgen. Eine momentane, also unmittelbar vor oder bei Durchführung eines Verfahrensschritts, Neigung kann also mit zumindest einem Neigungssensor des Abstützsystems erfasst werden.

In einem Berechnungs-Verfahrensschritt kann folglich eine Berechnung der Abfolge an Steuerbefehlen auf Basis einer momentan erfassten Neigung des Trägerfahrzeugs und/oder der Hebevorrichtung erfolgen, wobei die Abfolge an Steuerbefehlen entsprechend zum Verändern des vertikalen Aushebezustandes unter Beibehaltung der momentan erfassten Neigung des Trägerfahrzeugs und/oder der Hebevorrichtung relativ zu zumindest einer vorgegebenen oder vorgebbaren Raumrichtung und/oder Raumebene innerhalb eines vorgebbaren oder vorgegebenen Bereichs für eine Neigungsabweichung berechnet werden kann.

Alternativ oder in Kombination kann zumindest ein Parameter der Antriebe der Stützbeine als Parameter des Abstützsystems vorgegeben oder vorgebbar sein. Eine Vorgabe eines Parameters der Antriebe der Stützbeine kann über eine Benutzerschnittstelle der Steuerung erfolgen, beispielsweise durch einen Benutzer im Arbeitseinsatz und/oder werksseitig beim Aufbau der Hebevorrichtung und/oder eines Trägerfahrzeugs mit einer Hebevorrichtung.

In einem Berechnungs-Verfahrensschritt kann folglich eine Berechnung der Abfolge an Steuerbefehlen auf Basis der Parameter der Antriebe der Stützbeine erfolgen. Eine messtechnische Erfassung der momentanen Neigung kann dabei nicht zwingend nötig sein.

Vorteilhaft kann eine Vorgabe von zumindest einem Parameter des Abstützsystems eine Berechnung der Abfolge an Steuerbefehlen ermöglichen, welche bei Ausführung in einem Aushebe-Verfahrensschritt eine im Wesentlichen gleiche Änderung der Längserstreckung aller angesteuerten Antriebe der Stützbeine bewirkt. Damit kann eine Beibehaltung der momentanen Neigung innerhalb eines vorgebbaren oder vorgegebenen Bereichs für eine Neigungsabweichung erreicht werden.

Eine Änderung der Längserstreckung aller angesteuerten Antriebe der Stützbeine kann innerhalb eines vorgegebenen oder vorgebbaren Toleranzbereichs liegen. Der Toleranzbereich für die Änderung der Längserstreckung kann mit einem vorgegebenen oder vorgebbaren Bereich für eine damit einhergehende Neigungsabweichung korrespondieren.

Eine Änderung der Längserstreckung eines einzelnen Stützbeins durch Ansteuerung eines zugehörigen Antriebs mit einem entsprechend berechneten Steuerpuls kann zu einer Neigungsabweichung innerhalb eines vorgegebenen oder vorgebbaren Bereichs für eine damit einhergehende Neigungsabweichung führen.

Eine Änderung der Längserstreckung eines einzelnen Stützbeins durch Ansteuerung eines zugehörigen Antriebs mit einem entsprechend berechneten Steuerpuls kann in einem Bereich von 1 mm bis 150 mm, bevorzugt in einem Bereich von 1mm bis 50 mm, liegen.

Insgesamt kann eine Änderung der Längserstreckung mit der Abfolge an Steuerbefehlen in einem Bereich 1 cm bis 100 cm liegen. Größere Änderungen der Längserstreckungen sollen nicht ausgeschlossen sein.

Allgemein können Parameter des Abstützsystems, welche der Steuerung zuführbar sein können und in eine Berechnung der Abfolge an Steuerbefehlen einbeziehbar sind, beinhalten:
- Parameter der Antriebe der Stützbeine, wie etwa Hubraten, Kolbendurchmesser, Kolbenflächen, Pumpleistung, gegebenenfalls unter Berücksichtigung einer Rückölverwertung, und/oder elektrische Leistung und/oder
- Parameter der Geometrie der Stützbeine, wie etwa der vorherrschenden oder möglichen Längserstreckung, oder einer Länge von Auslegerarmen mit Stutzbeinen des Abstützsystems und/oder
- Parameter der Position der Stützbeine und/oder
- der Anzahl Stützbeine und/oder
- eine mit zumindest einem Neigungssensor des Abstützsystems momentan erfasste Neigung des Trägerfahrzeugs und/oder der Hebevorrichtung, und/oder
- einen vorgebbaren oder vorgegebenen Bereich für eine Neigungsabweichung
- eine aktuell vorgegebene, beispielsweise in einem vorangehenden Berechnungs-Verfahrensschritt berechnete Pulsdauer eines Steuerpulses und/oder
- eine Anzahl und/oder Position von Achsen des Trägerfahrzeugs und/oder
- eine Position einer auf dem Trägerfahrzeug angeordneten Hebevorrichtung und/oder
- eine Torsions- und Biegesteifigkeit und/oder eine Verwindung des Trägerfahrzeugs
- eine vorgegebenen oder vorgebbaren Raumrichtung und/oder Raumebene
- eine Position, insbesondere eine nominale Position, des Schwerpunkts des Trägerfahrzeugs und/oder der Hebevorrichtung
- eine auf ein Stützbein wirkende Belastung, vorzugsweise durch Erfassung eines Hydraulikdrucks in einem Antrieb eines Stützbeins und/oder durch einen Lastsensor
- Parameter der Ansteuerung der Antriebe der Stützbeine, wie etwa ein Steuerverhalten von Hydraulikventilen der Hydraulikversorgung von hydraulischen Antrieben und/oder ein Schaltverhalten von Energieversorgungen von elektrischen Antrieben
- einen durch zumindest einen Abstandssensor des Abstützsystems erfassten vertikalen Abstand des Trägerfahrzeugs und/oder der Hebevorrichtung relativ zu einem zur Abstützung verwendeten Untergrund

In einer Ausführung des Verfahrens kann in einem einzelnen Berechnungs-Verfahrensschritt eine Abfolge an Steuerbefehlen berechnet werden, welche in einem einzelnen Durchgang eines darauffolgenden Aushebe-Verfahrensschritt umgesetzt werden.

In einer weiteren Ausführung des Verfahrens kann in einem Berechnungs-Verfahrensschritt allgemein eine Abfolge an Steuerbefehlen zur sequentiellen und zeitlich begrenzten Ansteuerung einzelner Antriebe der Stützbeine des Abstützsystems zum Verändern des vertikalen Aushebezustandes berechnet werden, wobei dies ein Teil der insgesamt gewünschten oder benötigten Veränderung zum Ausrichten des Trägerfahrzeugs und/oder der Hebevorrichtung sein kann. Eine Wiederholung eines Berechnungs-Verfahrensschritts und eines Aushebe-Verfahrensschritts zum Erreichen einer insgesamt gewünschten oder vorgegebenen Veränderung ist in einer solchen Ausführung des Verfahrens möglich.

Zum weiteren Verändern des vertikalen Aushebezustandes des Trägerfahrzeugs und/oder der Hebevorrichtung kann in einer Schleife eine Wiederholung eines Berechnungs-Verfahrensschritts und des Aushebe-Verfahrensschritts erfolgen, wobei bei jeder Wiederholung der Schleife eine Abfolge an Steuerbefehlen zum Verändern des vertikalen Aushebezustandes unter Beibehaltung einer momentanen Neigung innerhalb eines vorgebbaren oder vorgegebenen Bereichs für eine Neigungsabweichung berechnet und die Abfolge an Steuerbefehlen durch Ansteuerung der Antriebe umgesetzt werden kann.

Allgemein kann eine Ansteuerung der Antriebe der Stützbeine des Abstützsystems so lange erfolgen, bis der vertikale Aushebezustand des Trägerfahrzeugs und/oder der Hebevorrichtung einen vorgegebenen oder vorgebbaren Sollwert erreicht oder unterschreitet.

Ein vorgegebener oder vorgebbarer Sollwert kann beispielsweise auf einen vertikalen Abstand, insbesondere entlang einer Vertikalen gemessen, eines Rahmens oder eines Referenzpunkts am Rahmen des Trägerfahrzeugs oder der Hebevorrichtung zur Oberfläche, und/oder auf eine Änderung der Längserstreckung der Stützbeine bezogen sein und über einen entsprechenden Sensor erfasst werden. Eine Vorgabe kann von einem Benutzer über eine entsprechende Benutzerschnittstelle einer Steuerung erfolgen.

Eine Ansteuerung der Antriebe der Stützbeine des Abstützsystems kann so lange erfolgen, wie von einem Benutzer über eine Benutzerschnittstelle einer Steuerung ein Bedienbefehl zum Verändern des vertikalen Aushebezustandes, also in anderen Worten ein Bedienbefehl zur Durchführung des Verfahrens, abgegeben wird.

Für den vertikalen Aushebezustand des Trägerfahrzeugs und/oder der Hebevorrichtung kann in jedem Durchgang einer Schleife, bei welchem eine Wiederholung des Berechnungs-Verfahrensschritts und des Aushebe-Verfahrensschritts erfolgt, eine teilweise Verringerung oder Vergrößerung des vertikalen Aushebezustandes erfolgen.

Bei jedem Durchgang der Schleife kann bei Erfassung durch einen Neigungssensor der Abstützung eine Neigung des Trägerfahrzeugs und/oder der Hebevorrichtung und eine entsprechende Abweichung von einer beizubehaltenden momentan erfassten Neigung erfasst werden. Dabei kann eine Abweichung von einer in einem vorangehenden Schleifendurchgang erfassten Neigung, beispielsweise der bei einem ersten Durchgang erfassten momentanen Neigung, als Referenz genommen werden. Es kann also eine momentan erfasste Neigung innerhalb eines Bereichs für eine Neigungsabweichung für mehrere Schleifendurchgänge beibehalten werden.

In einer vorteilhaften Ausführung des Verfahrens können in einem Berechnungs-Verfahrensschritt für alle Antriebe der an der Abstützung beteiligten Stützbeine des Abstützsystems eine Abfolge an Steuerbefehlen zur Veränderung des vertikalen Aushebezustandes des Trägerfahrzeugs und/oder der Hebevorrichtung berechnet werden, und in einem darauf folgenden Aushebe-Verfahrensschritt zumindest eine entsprechende Ansteuerung aller Antriebe der an der Abstützung beteiligten Stützbeine des Abstützsystems mit der Abfolge an Steuerbefehlen zur Veränderung des vertikalen Aushebezustandes des Trägerfahrzeugs und/oder der Hebevorrichtung erfolgen. Dadurch kann ein Verändern des Aushebezustandes mit einer minimalen Änderung der momentan erfassten Neigung erreichbar sein. Auch kann ein Abheben eines der an der Abstützung beteiligten Stützbeine vom Untergrund vermieden werden.

Innerhalb einer Abfolge können Antriebe einzelner Stützbeine mehrfach angesteuert werden.

Vorteilhaft erfolgt mit einem Neigungssensor des Abstützsystems eine Erfassung einer Neigung des Trägerfahrzeugs und/oder der Hebevorrichtung relativ zur Horizontalen. Eine Durchführung eines Aushebe-Verfahrensschritts kann vorteilhaft nur erfolgen, wenn die in einem Berechnungs-Verfahrensschritt momentan erfasste Neigung des Trägerfahrzeugs und/oder der Hebevorrichtung in einem Bereich von 0° bis 10°, vorzugsweise innerhalb von 0° bis 5°, besonders bevorzugt innerhalb von 0° bis 3°, gegenüber der Horizontalen liegt. Ein Bereich von 0° bis 1° ist ebenso denkbar.

In einer wie oben beschriebenen Neigung nahe an der Horizontalen wird das Trägerfahrzeug und/oder die Hebevorrichtung gewöhnlich als nivelliert bezeichnet. In anderen Worten kann eine Durchführung eines Aushebe-Verfahrensschritts vorteilhaft nur erfolgen, wenn das Trägerfahrzeug und/oder die Hebevorrichtung im Wesentlichen nivelliert sind.

Insbesondere kann eine Durchführung des Verfahrens vorteilhaft nur erfolgen, wenn sich das Trägerfahrzeugs und/oder die Hebevorrichtung im Wesentlichen in einer Horizontalen Ausrichtung befinden.

Eine zur Durchführung eines Aushebe-Verfahrensschritts geeignete Neigung kann beispielsweise durch ein Abstellen auf einem im Wesentlichen horizontalen Untergrund oder durch ein Nivellieren des Trägerfahrzeugs und/oder der Hebevorrichtung erfolgen.

Es soll nicht ausgeschlossen sein, dass das Trägerfahrzeug und/oder die Hebevorrichtung durch ein Verfahren zum Abstützen eines auf einem Untergrund abgestellten Trägerfahrzeugs in eine zur Durchführung eines Aushebe-Verfahrensschritts geeignete Neigung gebracht wird und/oder worden ist. Dabei kann in einem geeigneten Nivellierungs-Berechnungs-Verfahrensschritt eine Abfolge an Steuerbefehlen zur sequentiellen und zeitlich begrenzten Ansteuerung einzelner Antriebe der Stützbeine des Abstützsystems auf Basis einer momentan erfassten Neigung des Trägerfahrzeugs und/oder der Hebevorrichtung berechnet werden und in einem Nivellierungs-Verfahrensschritt eine Ansteuerung der Antriebe der Stützbeine des Abstützsystems mit der Abfolge an Steuerbefehlen zur Verringerung der Neigung des Trägerfahrzeugs und/oder der Hebevorrichtung relativ zu zumindest einer vorgegebenen oder vorgebbaren Raumrichtung und/oder Raumebene erfolgen, wobei mit der Abfolge an Steuerbefehlen eine sequentielle und zeitlich begrenzte Ansteuerung einzelner Antriebe der Stützbeine des Abstützsystems mit Steuerpulsen erfolgen kann.

In einer vorteilhaften Ausführung des Verfahrens kann, beispielsweise nach dem Abstellen des Trägerfahrzeugs auf dem Untergrund, in einem Bodenkontakt-Verfahrensschritt eine Ansteuerung der Antriebe der Stützbeine des Abstützsystems mit Steuerbefehlen erfolgen, durch welche die Stützbeine in Kontakt mit dem Untergrund gebracht werden. Die Steuerbefehle können als eine Abfolge an Steuerbefehlen zur sequentiellen und zeitlich begrenzten Ansteuerung einzelner Antriebe der Stützbeine des Abstützsystems auf Basis einer momentan erfassten Neigung des Trägerfahrzeugs und/oder der Hebevorrichtung berechnet werden.

Der vorgebbare oder vorgegebene Bereich für eine Neigungsabweichung kann innerhalb von 0° bis 10°, vorzugsweise innerhalb von 0° bis 5°, besonders bevorzugt innerhalb von 0° bis 3°, gegenüber der Horizontalen liegen.

In einer Schleife in einem Berechnungs-Verfahrensschritt, welcher auf einen zuvor durchgeführten Aushebe-Verfahrensschritt folgt, kann mit zumindest einem Neigungssensor des Abstützsystems eine Erfassung der Änderung der Neigung durch den vorangehenden Aushebe-Verfahrensschritt erfolgen. Dabei kann bestimmt werden, ob mit erfolgter Ausführung der Steuerbefehle eine entsprechende Änderung der Neigung beim Ausheben des Trägerfahrzeugs und/oder der Hebevorrichtung bewirkt wurde. Daraus kann sich ableiten lassen, ob sich die angesteuerten Stützbeine in Bodenkontakt befunden haben. Verlust des Bodenkontakts eines oder mehrerer Stützbeine kann eine Abbruchbedingung für die Durchführung des Verfahrens darstellen. Es soll nicht ausgeschlossen sein, dass sich durch die Erfassung der Änderung der Neigung eine Torsions- und Biegesteifigkeit und/oder eine Verwindung des Trägerfahrzeugs bestimmen lassen können.

In einer vorteilhaften Ausführung des Verfahrens kann die zeitlich begrenzte Ansteuerung der einzelnen Antriebe der Stützbeine des Abstützsystems mit der Abfolge an Steuerbefehlen mit Steuerpulsen mit variabler Pulsdauer erfolgen. Mit einer variablen Pulsdauer können unterschiedliche Parameter des Abstützsystems berücksichtigt werden.

Vorteilhaft kann eine variable Pulsdauer eine Berechnung der Abfolge an Steuerbefehlen ermöglichen, welche bei Ausführung in einem Aushebe-Verfahrensschritt eine im Wesentlichen gleiche Änderung der Längserstreckung aller angesteuerten Stützbeine, gegebenenfalls innerhalb eines Toleranzbereichs, bewirkt.

Eine Änderung der Längserstreckung eines einzelnen Stützbeins durch Ansteuerung eines zugehörigen Antriebs mit einem Steuerpuls mit entsprechend berechneter Pulsdauer kann zu einer Neigungsabweichung innerhalb eines vorgegebenen oder vorgebbaren Bereichs für eine damit einhergehende Neigungsabweichung führen.

Es kann vorteilhaft eine Skalierung der Pulsdauern der Steuerpulse erfolgen, wobei ausgehend von einer Pulsdauer eines ausgewählten Steuerpulses die Dauern der Steuerpulse aus der Abfolge auf eine gewünschte maximale oder minimale Pulsdauer skalierbar sein können.

Die Pulsdauer der Steuerpulse kann vorteilhaft 0,05 Sekunden bis 3,50 Sekunden betragen. Vorzugsweise kann die die Pulsdauer der Steuerpulse 0,25 Sekunden bis 1,5 Sekunden betragen. Es ist denkbar, dass die die Pulsdauer der Steuerpulse 0,25 bis 0,50 Sekunden beträgt.

Eine Variation der Pulsdauer - und gegebenenfalls einer Dauer einer Überlappung von aufeinanderfolgenden Steuerpulsen - kann grundsätzlich in Abhängigkeit von:
- Parametern der Antriebe der Stützbeine, wie etwa der Hubrate, dem Kolbendurchmesser oder der Pumpleistung gegebenenfalls unter Berücksichtigung einer Rückölverwertung und/oder
- Parametern der Geometrie der Stützbeine, wie etwa der vorherrschenden oder möglichen Längserstreckung, oder einer Länge von Auslegerarmen mit Stutzbeinen des Abstützsystems und/oder
- Parametern der Position der Stützbeine und/oder
- der Anzahl Stützbeine und/oder
- der momentan gemessenen Neigung des Trägerfahrzeugs und/oder der Hebevorrichtung, und/oder
- dem vorgebbaren oder vorgegebenen Bereich für eine Neigungsabweichung
- der aktuell vorgegebenen, beispielsweise in einem vorangehenden Berechnungs-Verfahrensschritt berechneten Pulsdauer und/oder
- der Anzahl und/oder Position von Achsen des Trägerfahrzeugs und/oder
- der Position einer auf dem Trägerfahrzeug angeordneten Hebevorrichtung und/oder
- einer Torsions- und Biegesteifigkeit und/oder eine Verwindung des Trägerfahrzeugs und/oder
- der vorgegebenen oder vorgebbaren Raumrichtung und/oder Raumebene erfolgen und/oder
- einer Position des Schwerpunkts des Trägerfahrzeugs und/oder der Hebevorrichtung und/oder
- einer durch Erfassung eines Hydraulikdrucks in einem Antrieb eines Stützbeins und/oder einer durch einen Lastsensor erfassten, auf ein Stützbein wirkenden Belastung und/oder
- von Parametern der Ansteuerung der Antriebe der Stützbeine, wie etwa einem Steuerverhalten von Hydraulikventilen der Hydraulikversorgung von hydraulischen Antrieben oder einem Schaltverhalten von Energieversorgungen von elektrischen Antrieben
- einen durch zumindest einen Abstandssensor des Abstützsystems erfassten vertikalen Abstand des Trägerfahrzeugs und/oder der Hebevorrichtung relativ zu einem zur Abstützung verwendeten Untergrund erfolgen.

In einer vorteilhaften Ausführung des Verfahrens kann die Ansteuerung der Antriebe der einzelnen Stützbeine des Abstützsystems mit der Abfolge an Steuerbefehlen in einer Ansteuerungssequenz in einer vorgebbaren oder vorgegebenen Reihenfolge erfolgen. Dabei können bestimmte Stützbeine des Abstützsystems bevorzugt angesteuert werden.

Eine bevorzugte Ansteuerung kann beispielsweise erfolgen, um Abweichungen von der beizubehaltenden Neigung gering zu halten oder um Torsions- und Biegesteifigkeiten des Trägerfahrzeugs zu berücksichtigen.

Eine bevorzugte Ansteuerung kann eine Auswahl oder Gewichtung einzelner oder mehrerer Stützbeine umfassen.

In einer vorteilhaften Ausführung des Verfahrens kann bei einer Ansteuerung der Antriebe der Stützbeine des Abstützsystems in einem Aushebe-Verfahrensschritt eine Vergrößerung und/oder Verkleinerung der Längserstreckung der Stützbeine erfolgen. Dadurch kann das Abstützsystems das Trägerfahrzeug nicht nur vom Untergrund weg ausheben, sondern dieses auch zum Untergrund hin absenken.

In einer vorteilhaften Ausführung des Verfahrens kann die Ansteuerung der einzelnen Antriebe der Stützbeine des Abstützsystems mit der Abfolge an Steuerbefehlen mit Steuerpulsen mit einer zeitlich begrenzten, vorgegebenen oder vorgebbaren Überlappung zwischen aufeinanderfolgenden Steuerpulsen erfolgen. Dabei können in der Abfolge an Steuerbefehlen aufeinanderfolgende Steuerpulse von der Steuerung abschnittsweise gleichzeitig ausgegeben werden.

Eine Überlappung von Steuerpulsen kann in einem Berechnungs-Verfahrensschritt berechnet werden.

Es kann also beispielsweise mit der Aktivierung eines Antriebs eines Stützbeins für die Dauer eines Steuerpulses durch Ausgabe durch die Steuerung begonnen werden, und vor Beendigung des laufenden Steuerpulses bereits mit der Aktivierung des Antriebs des nächsten Stützbeins gemäß der berechneten Abfolge begonnen werden.

Die zeitlich begrenzte, vorgegebene oder vorgebbare Dauer der Überlappung bestimmt die Dauer einer abschnittsweise gleichzeitigen Aktivierung von Antrieben von Stützbeinen.

Durch eine Überlappung zwischen aufeinanderfolgenden Steuerpulsen kann eine im Wesentlichen ruckfreie Ausrichtung eines Trägerfahrzeugs erfolgen. Auftretende Schwingungen durch abruptes An- und Abschalten von Antrieben von Stützbeinen können gemindert werden.

Dabei kann vorteilhaft innerhalb der Überlappung zwischen aufeinanderfolgenden Steuerpulsen eine gleichzeitige Ansteuerung von maximal zwei Antrieben erfolgen.

Die Dauer der Überlappung zwischen aufeinanderfolgenden, von der Steuerung ausgegebenen Steuerpulsen kann allgemein zwischen 0,01 Sekunden und 0,5 Sekunden betragen. Vorzugsweise kann die Dauer der Überlappung zwischen 0,01 Sekunden und 0,1 Sekunden betragen.

In einer vorteilhaften Ausführung des Verfahrens kann nach Verändern des vertikalen Aushebezustandes des Trägerfahrzeugs und/oder der Hebevorrichtung, also etwa nach einem oder mehreren Durchgängen des Berechnungs-Verfahrensschritts und des Aushebe-Verfahrensschritts, in einem Überwachungs-Verfahrensschritt eine fortlaufende Erfassung einer Neigung des Trägerfahrzeugs und/oder der Hebevorrichtung relativ zu zumindest einer vorgegebenen oder vorgebbaren Raumrichtung und/oder Raumebene erfolgen.

Wird beispielsweise nach Abstützen und Ausheben des Trägerfahrzeugs eine an diesem angeordnete Hebevorrichtung im Arbeitsbetrieb verwendet, oder beispielsweise eine Zuladung des Trägerfahrzeugs verändert, können durch auftretende Belastungen und/oder Veränderungen im zur Abstützung verwendeten Untergrund unerwünschte Änderungen der Neigung des Trägerfahrzeugs und/oder der Hebevorrichtung auftreten. Diese können durch eine fortlaufende Erfassung der Neigung erkannt und bestimmt werden.

Dabei kann bei Erreichen oder Überschreiten einer vorgegebenen oder vorgebbaren Abweichung der erfassten Neigung, aber auch unabhängig vom Wert einer erfassten Neigung, zur Minimierung der Neigung des Trägerfahrzeugs und/oder der Hebevorrichtung eine Ausführung zumindest eines Nivellierungs-Berechnungs-Verfahrensschritt eine Abfolge an Steuerbefehlen zur sequentiellen und zeitlich begrenzten Ansteuerung einzelner Antriebe der Stützbeine des Abstützsystems auf Basis einer momentan erfassten Neigung des Trägerfahrzeugs und/oder der Hebevorrichtung berechnet werden und in einem Nivellierungs-Verfahrensschritt eine Ansteuerung der Antriebe der Stützbeine des Abstützsystems mit der Abfolge an Steuerbefehlen zur Verringerung der Neigung des Trägerfahrzeugs und/oder der Hebevorrichtung relativ zu zumindest einer vorgegebenen oder vorgebbaren Raumrichtung und/oder Raumebene erfolgen, wobei mit der Abfolge an Steuerbefehlen eine sequentielle und zeitlich begrenzte Ansteuerung einzelner Antriebe der Stützbeine des Abstützsystems mit Steuerpulsen erfolgen kann. Eine Neigung kann damit etwa wieder in den vorgebbaren oder vorgegebenen Bereich für eine Neigungsabweichung innerhalb von 0° bis 10°, vorzugsweise innerhalb von 0° bis 5°, besonders bevorzugt innerhalb von 0° bis 3°, gegenüber der Horizontalen gebracht werden.

Bei der Minimierung der Neigung kann der gegenwärtig vorherrschende Aushebezustand im Wesentlichen beibehalten werden, gegebenenfalls innerhalb eines vorgegebenen oder vorgebbaren Toleranzbereichs für den Aushebezustand.

Eine Minimierung der Neigung kann durch die Steuerung autonom oder nach entsprechender Bestätigung, oder durch gezielte Auswahl durch einen Benutzer erfolgen.

Schutz wird auch begehrt für ein Computerprogrammprodukt, umfassend Befehle, welche bei einer Ausführung durch eine Recheneinheit einer Steuerung für ein Abstützsystem, die zur Durchführung eines vorgenannten Verfahrens ausgebildet ist, die Steuerung veranlassen, aus einer Speichereinheit, welche mit der Recheneinheit in einer Datenverbindung steht oder in eine solche bringbar ist, ein wie zuvor beschriebenes Verfahren auszuführen.

Befehle des Computerprogrammprodukts können beispielsweise in wenigstens einer Speichereinheit einer Steuerung hinterlegt sein und durch wenigstens eine Recheneinheit einer Steuerung ausgeführt werden.

Schutz wird auch begehrt für eine Steuerung für ein Abstützsystem die zur Durchführung eines wie zuvor beschriebenen Verfahrens ausgebildet ist.

Die Steuerung kann grundsätzlich wenigstens eine Recheneinheit und wenigstens eine Speichereinheit aufweisen. Die Recheneinheit kann mit der Speichereinheit in einer Datenverbindung stehen oder in eine solche bringbar sein.

Von der Steuerung kann in einem Berechnungs-Betriebsmodus eine Abfolge an Steuerbefehlen zur sequentiellen und zeitlich begrenzten Ansteuerung einzelner Antriebe der Stützbeine des Abstützsystems zum Verändern des vertikalen Aushebezustandes unter Beibehaltung der momentanen Neigung innerhalb eines vorgebbaren oder vorgegebenen Bereichs für eine Neigungsabweichung berechenbar sein.

Die Berechnung kann beispielsweise von einer Recheneinheit der Steuerung erfolgen, und berechnete Steuerbefehle können in einer Speichereinheit der Steuerung abgelegt werden.

In einem Ansteuer-Betriebsmodus der Steuerung können die die Antriebe der Stützbeine des Abstützsystems mit der Abfolge an Steuerbefehlen zur Veränderung des vertikalen Aushebezustandes des Trägerfahrzeugs und/oder der Hebevorrichtung relativ zum Untergrund ansteuerbar sein, wobei mit der Abfolge an Steuerbefehlen eine sequentielle und zeitlich begrenzte Ansteuerung der Antriebe der Stützbeine des Abstützsystems mit Steuerpulsen erfolgen kann.

Dabei können in einer Speichereinheit der Steuerung abgelegte Steuerbefehle entsprechend der Abfolge von der Steuerung ausgegeben werden.

Die Steuerbefehle können von der Steuerung beispielsweise an steuerbare Ventile einer Hydrauliksystems einer Hebevorrichtung ausgegeben werden, wobei die steuerbaren Ventile eine Versorgung von hydraulischen Antrieben des Abstützsystems steuern können.

Die Steuerung kann eine Benutzerschnittstelle für einen Benutzer aufweisen, welche allgemein als ein Bedienelement der Steuerung, etwa als ein Hebel, ein Knopf oder ein Feld auf einer berührempfindlichen Anzeige, insbesondere auf einer mobilen Fernsteuerung der Steuerung der Hebevorrichtung, ausgeführt und allgemein zum Datenaustausch mit der Steuerung geeignet sein kann. Die Steuerung kann zumindest teilweise an der Hebevorrichtung angeordnet sein oder an dieser anordenbar sein.

Schutz wird auch begehrt für ein Fahrzeug, insbesondere Trägerfahrzeug mit einer Hebevorrichtung, mit einem wie zuvor beschriebenen Abstützsystem und einer wie zuvor beschriebenen Steuerung für das Abstützsystem. Die Hebevorrichtung kann allgemein als Kran, insbesondere als Knickarmkran, ausgebildet sein.

Ausführungsbeispiele der Erfindung werden anhand der Figuren diskutiert. Es zeigen:
- Fig. 1: schematisch den Ablauf einer Ausführung des Verfahrens,
- Fig. 2: schematisch den Ablauf einer weiteren Ausführung des Verfahrens,
- Fig. 3: eine Seitenansicht einer Ausführung eines auf einem geneigten Untergrund abgestellten Trägerfahrzeug,
- Fig. 4a und 4b: Seitenansichten einer Ausführung eines auf einem geneigten Untergrund abgestellten, nivellierten und ausgehobenen Trägerfahrzeug,
- Fig. 5: eine Draufsicht einer Ausführung eines Trägerfahrzeugs,
- Fig. 6: eine schematische Darstellung einer Draufsicht einer Ausführung eines Trägerfahrzeugs
- Fig. 7: eine schematische Darstellung einer Hebevorrichtung mit einer Ausführung eines Abstützsystems
- Fig. 8: eine perspektivische Ansicht einer Ausführung eines Trägerfahrzeugs,
- Fig. 9a bis 9d: eine schematische Darstellung eines Veränderns des vertikalen Aushebezustandes, und
- Fig. 10a und 10b: jeweils eine schematische Darstellung dreier aufeinanderfolgender Steuerpulse.

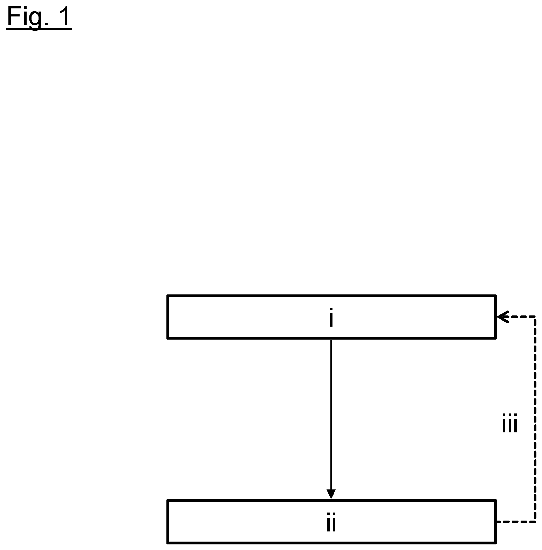

Mit Bezug auf die in den obig aufgelisteten Figuren gezeigten Ausführungen eines Trägerfahrzeugs 8 mit einem Abstützsystem 7 illustriert Figur 1 eine Ausführung eines Verfahrens zum zum Verändern des vertikalen Aushebezustandes eines auf einem Untergrund 10 abgestellten Trägerfahrzeugs 8 für eine Hebevorrichtung 9 mit einem Abstützsystem 7. Das Abstützsystem 7 umfasst wie dargestellt
- vertikal in ihrer Längserstreckung verstellbare Stützbeine 1, 2, 3, 4 zur Abstützung auf dem Untergrund 10, und
- eine Steuerung 5 zur Ansteuerung von Antrieben der Stützbeine 1, 2, 3, 4 mit Steuerbefehlen, und
- vorteilhaft zumindest einen Neigungssensor 6 zur Erfassung einer Neigung α des Trägerfahrzeugs 8 und/oder der Hebevorrichtung 9 relativ zu zumindest einer vorgegebenen oder vorgebbaren Raumrichtung und/oder Raumebene.

In wenigstens einem Berechnungs-Verfahrensschritt i kann eine Abfolge an Steuerbefehlen zur sequentiellen und zeitlich begrenzten Ansteuerung einzelner Antriebe der Stützbeine 1, 2, 3, 4 des Abstützsystems 7 zum Verändern des vertikalen Aushebezustandes unter Beibehaltung der momentanen Neigung α innerhalb eines vorgebbaren oder vorgegebenen Bereichs Δα für eine Neigungsabweichung berechnet werden.

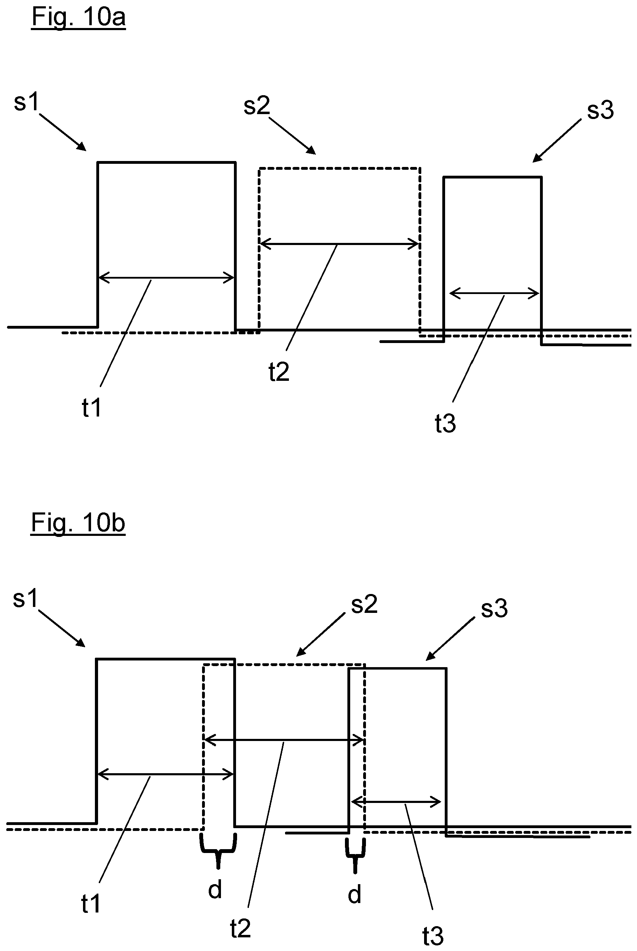

In wenigstens einem darauf folgenden Aushebe-Verfahrensschritt ii kann eine Ansteuerung der Antriebe der Stützbeine 1, 2, 3, 4 des Abstützsystems 7 mit der Abfolge an Steuerbefehlen zur Veränderung des vertikalen Aushebezustandes des Trägerfahrzeugs 8 und/oder der Hebevorrichtung 9 relativ zum Untergrund 10 erfolgen, wobei mit der Abfolge an Steuerbefehlen eine sequentielle und zeitlich begrenzte Ansteuerung einzelner Antriebe der Stützbeine 1, 2, 3, 4 des Abstützsystems 7 mit Steuerpulsen s1, s2, s3 (siehe Figuren 10a und 10b) erfolgen kann.

In einem Berechnungs-Verfahrensschritt i kann eine Berechnung der Abfolge an Steuerbefehlen auf Basis von wenigstens einem Parameter des Abstützsystems 7 erfolgen, wobei mit zumindest einem Neigungssensor 6 des Abstützsystems 7 eine momentane Neigung α als ein Parameter des Abstützsystems 7 erfassbar ist und in einem Berechnungs-Verfahrensschritt i eine Berechnung der Abfolge an Steuerbefehlen auf Basis einer momentan erfassten Neigung α des Trägerfahrzeugs 8 und/oder der Hebevorrichtung 9 erfolgt.

Alternativ oder in Kombination kann zumindest ein Parameter der Antriebe der Stützbeine 1, 2, 3, 4 als Parameter des Abstützsystems 7 vorgegeben oder vorgebbar sein, etwa durch eine Benutzerschnittstelle 21, und in einem Berechnungs-Verfahrensschritt i eine Berechnung der Abfolge an Steuerbefehlen auf Basis der Parameter der Antriebe der Stützbeine 1, 2, 3, 4 erfolgt.

Allgemein können Parameter des Abstützsystems 7, welche der Steuerung 6 zuführbar sein können und in eine Berechnung der Abfolge an Steuerbefehlen einbeziehbar sind, beinhalten:
- Parameter der Antriebe der Stützbeine 1, 2, 3, 4, wie etwa Hubraten, Kolbendurchmesser, Kolbenflächen, Pumpleistung und/oder elektrische Leistung und/oder
- Parameter der Geometrie der Stützbeine 1, 2, 3, 4, wie etwa der vorherrschenden oder möglichen Längserstreckung x11, x12, x13, x21, x22, oder einer Länge von Auslegerarmen mit Stutzbeinen 1, 2, 3, 4 des Abstützsystems 7 und/oder
- Parameter der Position der Stützbeine 1, 2, 3 ,4 und/oder
- der Anzahl Stützbeine 1, 2, 3, 4 und/oder
- eine mit zumindest einem Neigungssensor 6 des Abstützsystems 7 momentan erfasste Neigung α des Trägerfahrzeugs 8 und/oder der Hebevorrichtung 9, und/oder
- einen vorgebbaren oder vorgegebenen Bereich Δα für eine Neigungsabweichung und/oder
- eine aktuell vorgegebene, beispielsweise in einem vorangehenden Berechnungs-Verfahrensschritt i berechnete Pulsdauer t1, t2, t3 eines Steuerpulses s1, s2, s3 und/oder
- eine Anzahl und/oder Position von Achsen des Trägerfahrzeugs 8 und/oder
- eine Position einer auf dem Trägerfahrzeug 8 angeordneten Hebevorrichtung 9 und/oder
- eine Torsions- und Biegesteifigkeit und/oder eine Verwindung des Trägerfahrzeugs 8 und/oder
- eine vorgegebenen oder vorgebbaren Raumrichtung H und/oder Raumebene und/oder
- eine Position, insbesondere eine nominale Position, des Schwerpunkts des Trägerfahrzeugs 8 und/oder der Hebevorrichtung 9 und/oder
- eine auf ein Stützbein 1, 2, 3, 4 wirkende Belastung, vorzugsweise durch Erfassung eines Hydraulikdrucks in einem Antrieb eines Stützbeins 1, 2, 3, 4 und/oder durch einen Lastsensor und/oder
- Parameter der Ansteuerung der Antriebe der Stützbeine 1, 2, 3,4, wie etwa ein Steuerverhalten von Hydraulikventilen der Hydraulikversorgung von hydraulischen Antrieben oder ein Schaltverhalten von Energieversorgungen von elektrischen Antrieben und/oder
- einen durch zumindest einen Abstandssensor des Abstützsystems 7 erfassten vertikalen Abstand des Trägerfahrzeugs 8 und/oder der Hebevorrichtung 9 relativ zu einem zur Abstützung verwendeten Untergrund 10.

Eine Ansteuerung der Antriebe der Stützbeine 1, 2, 3, 4 des Abstützsystems 7 kann so lang erfolgen, beispielsweise in einer optionalen Schleife iii mit einer Wiederholung des Berechnungs-Verfahrensschritts i und des Aushebe-Verfahrensschritts ii, bis der vertikale Aushebezustand des Trägerfahrzeugs 8 und/oder der Hebevorrichtung 9 einen vorgegebenen oder vorgebbaren Sollwert erreicht oder unterschreitet, oder so lange von einem Benutzer über eine Benutzerschnittstelle einer Steuerung 5 ein Bedienbefehl zum Verändern des vertikalen Aushebezustandes abgegeben wird**.** Allgemein kann in der Schleife iii in einem Berechnungs-Verfahrensschritt i, welcher auf einen zuvor durchgeführten Nivellierungs-Verfahrensschritt ii folgen kann, eine Erfassung der Änderung der Neigung α durch den vorangehenden Nivellierungs-Verfahrensschritt ii erfolgen. Dadurch können Effekte der durchgeführten Ansteuerung beurteilt werden.

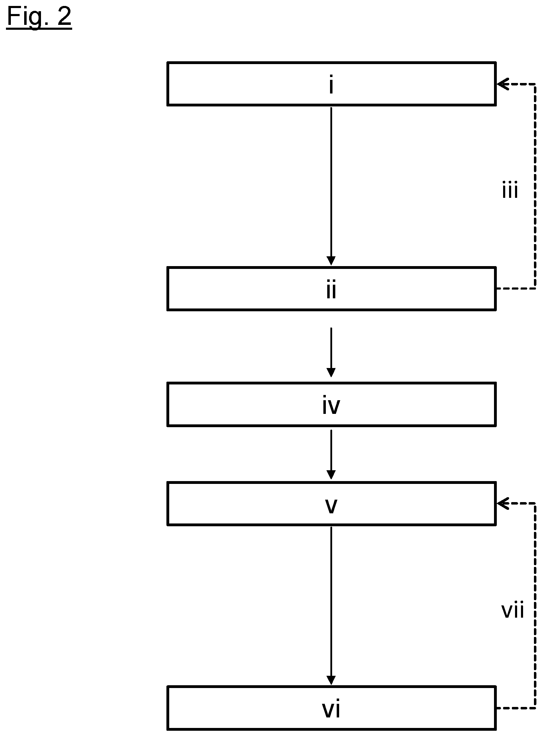

Wie in einer besonders bevorzugten Ausführung des Verfahrens kann, wie in Figur 2 schematisch gezeigt ist, nach nach erfolgtem Verändern des vertikalen Aushebezustandes des Trägerfahrzeugs 8 und/oder der Hebevorrichtung 9 (Schritte i und ii und optional iii) in einem Überwachungs-Verfahrensschritt iv eine fortlaufende Erfassung einer Neigung α des Trägerfahrzeugs 8 und/oder der Hebevorrichtung 9 relativ zu zumindest einer vorgegebenen oder vorgebbaren Raumrichtung und/oder Raumebene erfolgen.

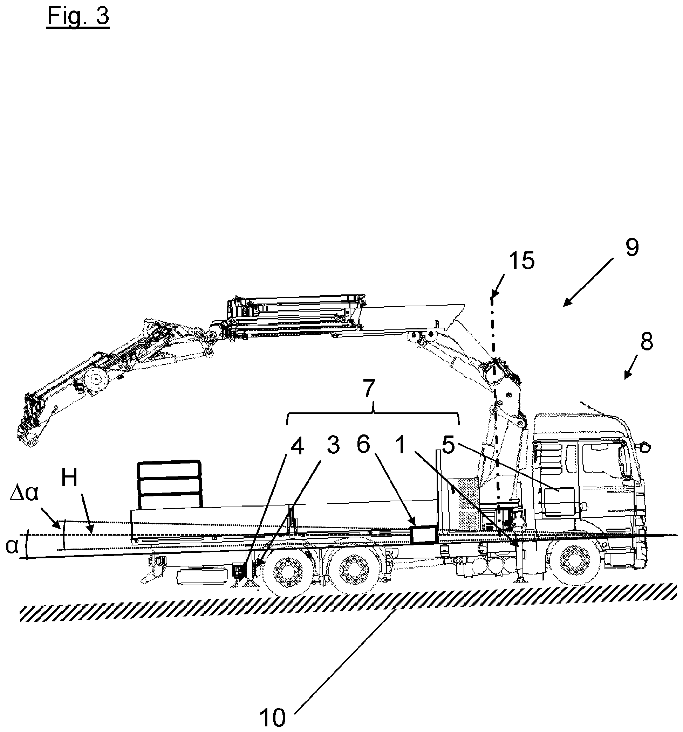

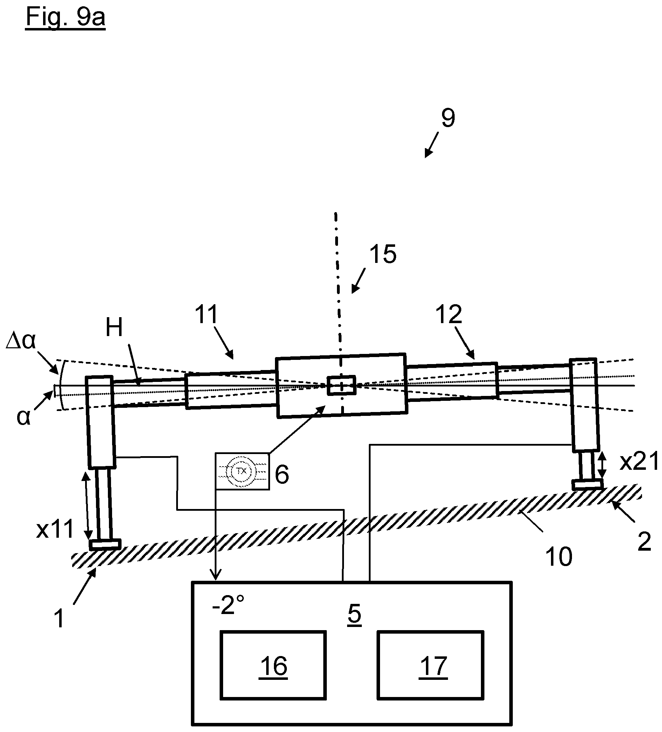

Dabei kann bei Erreichen oder Überschreiten eines vorgegebenen oder vorgebbaren Bereichs Δα für eine Neigungsabweichung der erfassten Neigung α (siehe etwa Figur 3 und Figur 9a) eine Wiederholung der Ausführung zumindest eines Berechnungs-Verfahrensschritts i und zumindest eines Aushebe-Verfahrensschritts ii erfolgen.

Zur Beibehaltung der Neigung α des Trägerfahrzeugs 8 und/oder der Hebevorrichtung 9 innerhalb des vorgegebenen oder vorgebbaren Bereichs Δα für eine Neigungsabweichung kann in einer optionalen Schleife vii ein Nivellierungs-Berechnungs-Verfahrensschritt v und ein Nivellierungs-Verfahrensschritts vi erfolgen, bis die erfasste Neigung α des Trägerfahrzeugs 8 und/oder der Hebevorrichtung 9 wieder innerhalb des vorgegebenen oder vorgebbaren Bereichs Δα für eine Neigungsabweichungt liegt.

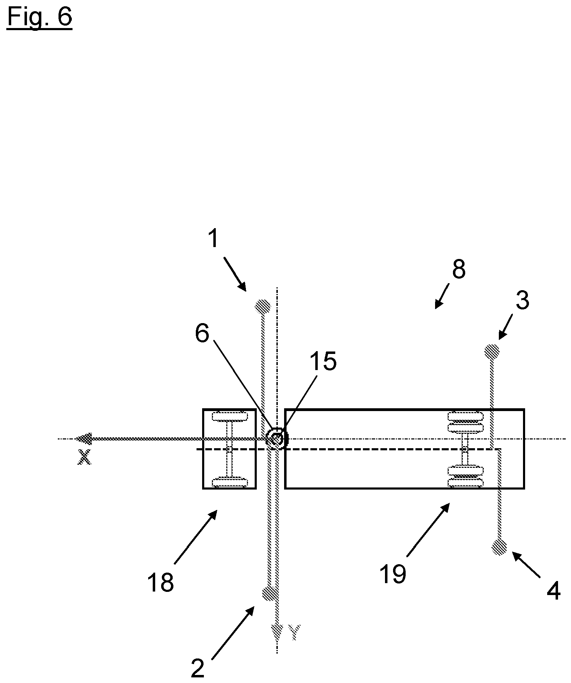

Figur 3 zeigt eine Seitenansicht einer Ausführung eines auf einem geneigten (Neigungswinkel in der Darstellung etwa 5°) Untergrund 10 abgestellten Trägerfahrzeugs 8 mit einer darauf angeordneten Hebevorrichtung 9 in Form eines Knickarmkrans. Der Untergrund 10 ist um einen Winkel gegenüber der Horizontalen H geneigt. Das auf dem geneigten Untergrund 10 abgestellte Trägerfahrzeug 8 ist in diesem unabgestützten Zustand im Wesentlichen um eine Querachse y des Trägerfahrzeugs 8 (siehe Figur 6) um die Neigung α, in dieser Ausführung gemessen relativ zum Fahrzeugrahmen, gegenüber der Horizontalen H geneigt. Eine Neigung des Trägerfahrzeugs 8 um eine Längsachse x kann analog gegeben sein, ist in dieser beispielhaften Ausführung jedoch nicht gezeigt.

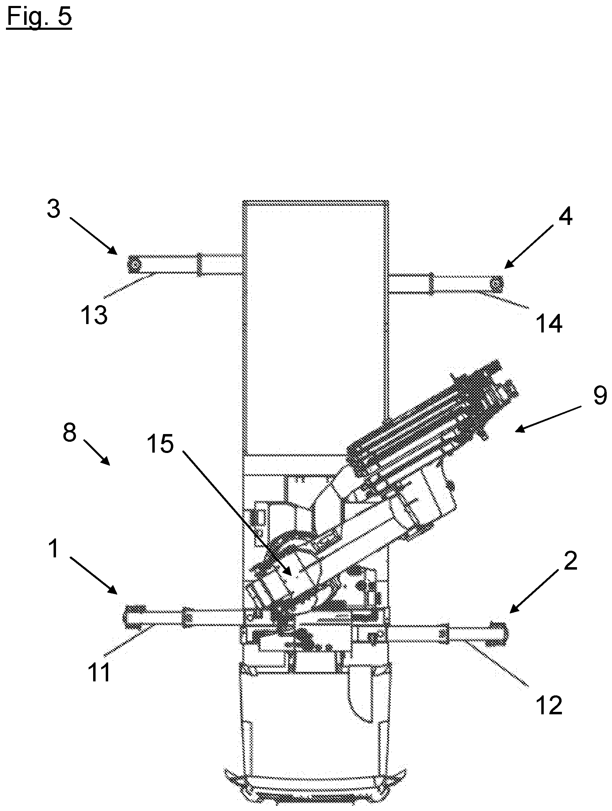

Das Trägerfahrzeug 8 weist in dieser Ausführung ein Abstützsystem mit vier Stützbeinen 1, 2, 3, 4 (teilweise verdeckt, vergleiche auch Figur 5), einem Neigungssensor 6 und einer in dieser Ausführung am Trägerfahrzeug 8 angeordneten Steuerung 5 zur Ansteuerung von Antrieben der Stützbeine 1, 2, 3, 4 mit Steuerbefehlen auf.

Es kann etwa aus Sicherheitsgründen der Fall sein, dass die gegebene momentane Neigung α nicht dazu geeignet ist, eine Durchführung eines Aushebe-Verfahrensschritts ii zu erlauben, womit ein Nivellieren des Fahrzeugs nötig sein kann. Es kann beispielsweise vorgegeben sein, dass die momentan erfasste Neigung α des Trägerfahrzeugs 8 und/oder der Hebevorrichtung 9 in einem Bereich von 0° bis 3° gegenüber der Horizontalen H liegt. Ein solcher beispielhafter Bereich Δα für eine Neigungsabweichung der momentanen Neigung α ist in Figur 3 beidseitig der Horizontalen H eingezeichnet. Bei einem Abstellen auf einem entsprechend ungeneigten Untergrund 10 kann ein Nivellieren vor Durchführung des Verfahrens entfallen.

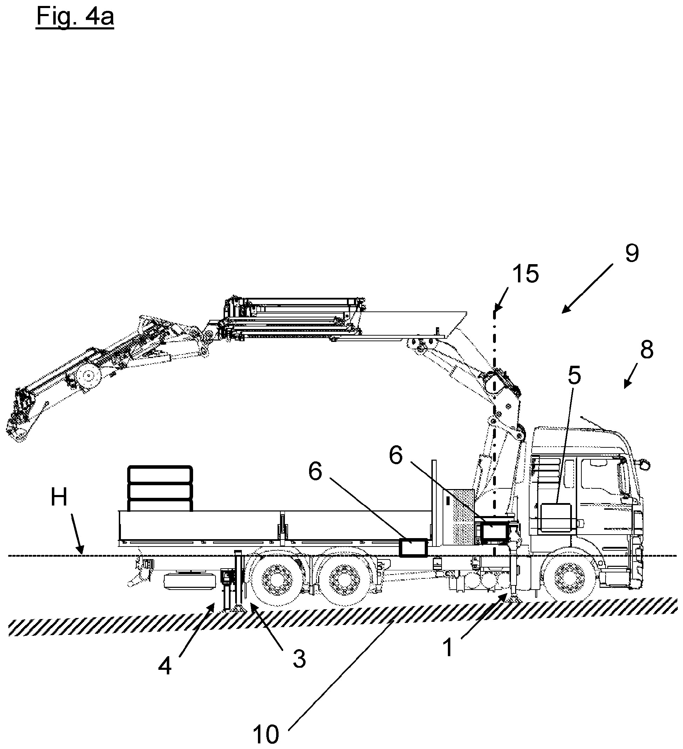

Figur 4a zeigt eine Seitenansicht der in Figur 3 gezeigten Ausführung eines auf einem geneigten Untergrund 10 abgestellten Trägerfahrzeugs 8. Das abgestellte Trägerfahrzeug ist nach erfolgter Abstützung über die Stützbeine 1, 2, 3, 4 auf dem Untergrund 10 zur Horizontalen H ausgerichtet und somit nivelliert worden. Die Neigung α gegenüber der Horizontalen H beträgt in der Darstellung im Wesentlichen 0°.

Eine solche momentane Neigung α gegenüber der Horizontalen H kann zur Durchführung eines Aushebe-Verfahrensschritts ii des Verfahrens geeignet sein.

Anders als dargestellt kann die Neigung auch auf den Winkel einer im Wesentlichen vertikal verlaufenden Schwenkachse 15 einer Kransäule der Hebevorrichtung 9 zur Horizontalen H oder zu einer vertikalen Ebene bezogen sein. Dazu zeigt Figur 4a eine alternative oder zusätzliche Anordnung des Neigungssensors 6. Zur Ausrichtung kann ein zumindest annähernd rechter Winkel der Schwenkachse 15 der Kransäule zur Horizontalen H angestrebt werden.

Allgemein kann eine Ausrichtung relativ zu einer vorgegebenen oder vorgebbaren Raumrichtung und/oder Raumebene möglich sein.

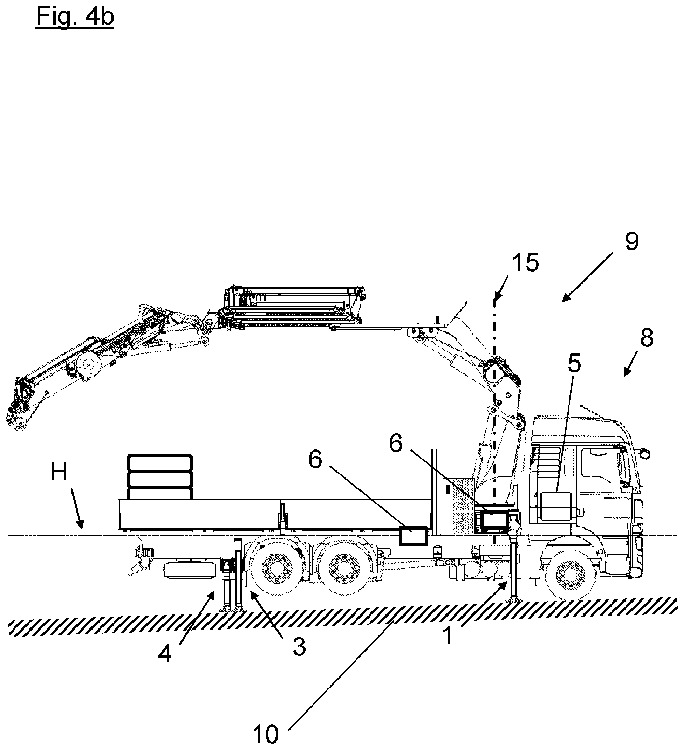

Figur 4b zeigt eine Seitenansicht des in Figur4a gezeigten, auf einem geneigten Untergrund 10 abgestellten Trägerfahrzeugs 8, wobei das Trägerfahrzeug 8 durch ein Verfahren zum Verändern des vertikalen Aushebezustandes relativ zum Untergrund 10 unter Beibehaltung der momentanen Neigung α angehoben wurde.

Es ist erkennbar, dass zumindest ein Rad des Trägerfahrzeugs 8 am Untergrund 10 verblieben ist, das Trägerfahrzeug 8 ist also durch die Stützbeine 1, 2, 3, 4 nicht vollständig ausgehoben worden. Anders als dargestellt kann auch ein vollständiges Ausheben des Trägerfahrzeugs 8 erfolgen.

Figur 5 zeigt eine Draufsicht einer wie zuvor gezeigten Ausführung eines Trägerfahrzeugs 8. Wie dargestellt weist das Abstützsystem 7 horizontal verstellbare Stützarme 11, 12, 13, 14, an denen die Stützbeine 1, 2, 3, 4 angeordnet sind, auf. Die Steuerung 5 kann zur Ansteuerung von Antrieben der Stützarme 11, 12, 13, 14 mit Steuerbefehlen ausgebildet sein.

Figur 6, welche eine schematische Darstellung einer Draufsicht einer Ausführung eines Trägerfahrzeugs 8 mit einer Vorderachse 18 und einer Hinterachse 19 analog zu den vorangehenden Ausführungen zeigt, illustriert die Längsachse x und die Querachse y des Trägerfahrzeugs 8. Der Neigungssensor 6 kann wie dargestellt im Ursprung des auf der Schwenkachse 15 der Kransäule der Hebevorrichtung 9 gelegenen, von der Längsachse x und der Querachse y aufgespannten Koordinatensystems liegen.

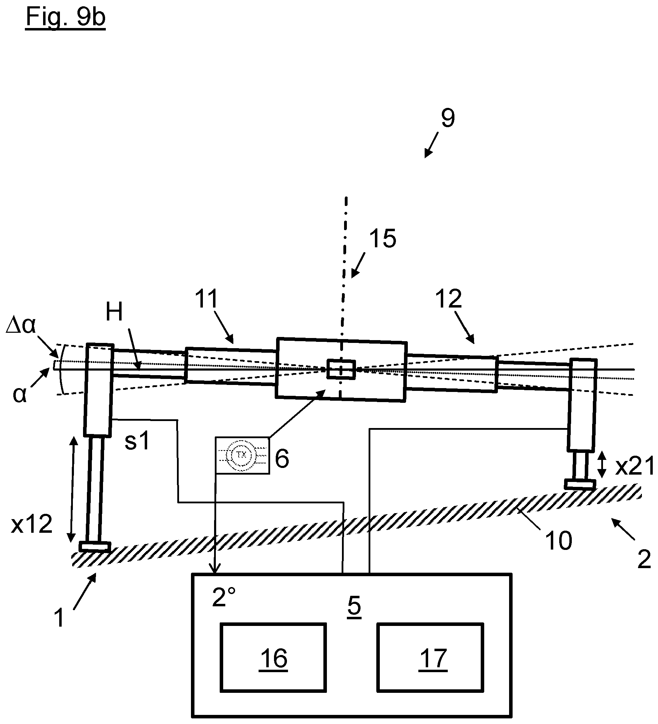

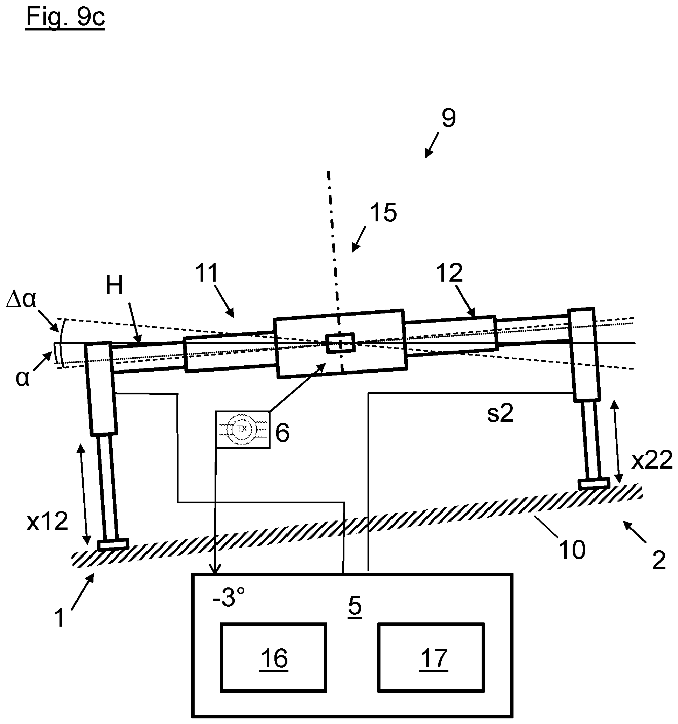

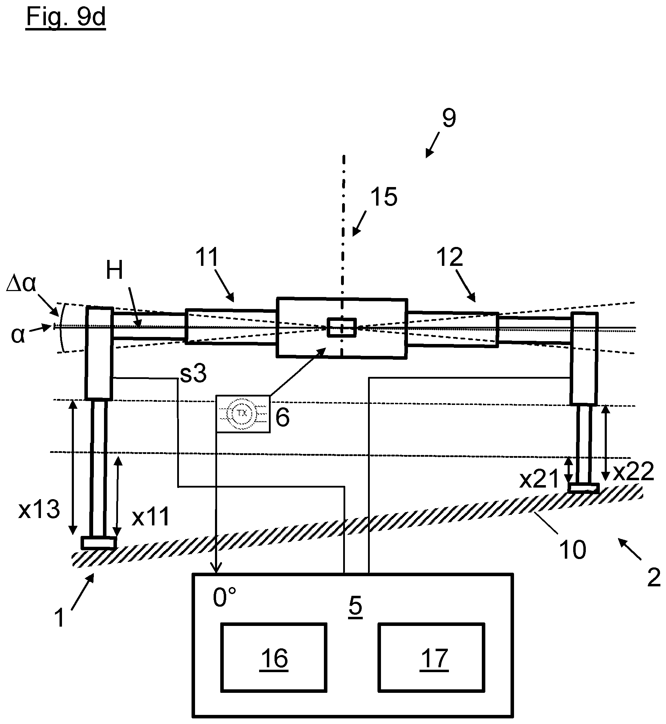

Durch die Relation der Längserstreckungen der Stützbeine 1 und 2 (vgl. Figur 9) kann eine Ausrichtung um die Längsachse x erfolgen. Durch den Gleichanteil, also den jeweiligen Absolutwert der Längserstreckungen, kann eine Ausrichtung um die Querachse y erfolgen.

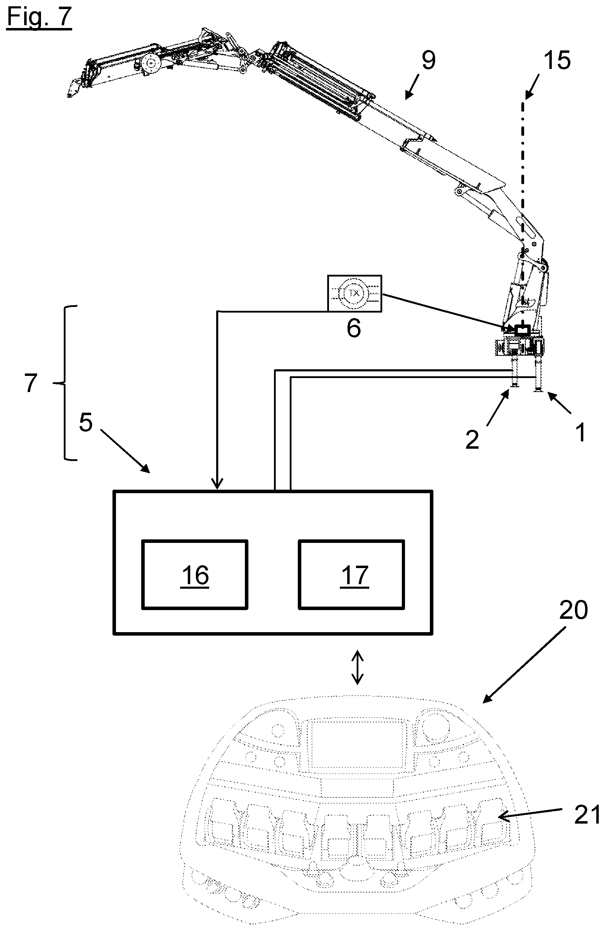

Eine Variation der Pulsdauer t1, t2, t3 der Steuerpulse s1, s2, s3, mit denen die Steuerung 5 (vgl. Figur 7) die Antriebe der Stützbeine 1, 2, 3, 4 ansteuern kann, und ggf. einer Überlappung d, kann in Abhängigkeit von:
- Parametern der Antriebe der Stützbeine 1, 2, 3, 4 und/oder
- Parametern der Geometrie der Stützbeine 1, 2, 3, 4, etwa deren Abstand zur Schwenkachse 15 der Kransäule der Hebevorrichtung 8 und/oder
- Parametern der Position der Stützbeine 1, 2, 3, 4, etwa deren Anordnung auf dem Fahrzeugrahmen relativ zu einer Hebevorrichtung 8, insbesondere relativ zu einer Schwenkachse 15 einer Kransäule der Hebevorrichtung 8, und/oder
- der Anzahl Stützbeine 1, 2, 3, 4 und/oder
- der momentan gemessenen Neigung α des Trägerfahrzeugs 8 und/oder der Hebevorrichtung 9 und/oder
- dem vorgebbaren oder vorgegebenen Bereich Δα für eine Neigungsabweichung und/oder
- der aktuell vorgegebenen Pulsdauer t1, t2, t3 und/oder
- der Position von Achsen 18, 19 des Trägerfahrzeugs 8 und/oder
- der Position einer auf dem Trägerfahrzeug 8 angeordneten Hebevorrichtung 9 und/oder
- einer Torsions- und Biegesteifigkeit und/oder einer Verwindung des Trägerfahrzeugs 8 und/oder
- der vorgegebenen oder vorgebbaren Raumrichtung und/oder Raumebene
erfolgen.

Figur 7 zeigt eine schematische Darstellung einer Hebevorrichtung 9 mit einer Ausführung eines Abstützsystems 7. Das Abstützsystem 7 umfasst wie dargestellt
- vertikal in ihrer Längserstreckung zwei verstellbare Stützbeine 1, 2 zur Abstützung auf einem Untergrund 10, und
- eine Steuerung 5 zur Ansteuerung von Antrieben der Stützbeine 1, 2 mit Steuerbefehlen, und
- zumindest einen Neigungssensor 6 zur Erfassung einer Neigung α der Hebevorrichtung 9 relativ zu zumindest einer vorgegebenen oder vorgebbaren Raumrichtung und/oder Raumebene.

Anders als dargestellt kann das Abstützsystem 7 zusätzliche Stützbeine und mehrere Neigungssensoren 6 aufweisen, etwa wie jene in den Figuren 3 bis 6.

Neben dem Neigungssensor 6 können der Steuerung 5 allgemein auch Messwerte zu Betriebsparametern der Stützbeine 1, 2 zuführbar sein.

Die Steuerung 5 kann grundsätzlich wenigstens eine Recheneinheit 16 und wenigstens eine Speichereinheit 17 aufweisen. Die Recheneinheit 16 kann mit der Speichereinheit 17 in einer Datenverbindung stehen oder in eine solche bringbar sein.

Die Steuerung 5 kann eine Benutzerschnittstelle 21 für einen Benutzer aufweisen, welche allgemein als ein Bedienelement der Steuerung, etwa als ein Hebel, ein Knopf oder ein Feld auf einer berührempfindlichen Anzeige, insbesondere wie in Figur 7 dargestellt auf einer mobile Fernsteuerung 20 der Steuerung 5 der Hebevorrichtung 9, ausgeführt sein kann.

Die Steuerung 5 kann zumindest teilweise an der Hebevorrichtung 9 angeordnet sein oder an dieser anordenbar sein.

Von der Steuerung 5 kann in einem Berechnungs-Betriebsmodus auf Basis einer momentan erfassten Neigung α der Hebevorrichtung 9 eine Abfolge an Steuerbefehlen in Form von Steuerpulsen s1, s2, s3 zur sequentiellen und zeitlich begrenzten Ansteuerung einzelner Antriebe der Stützbeine 1, 2 des Abstützsystems 7 zum Verändern des vertikalen Aushebezustandes unter Beibehaltung der momentanen Neigung α innerhalb eines vorgebbaren oder vorgegebenen Bereichs Δα für eine Neigungsabweichung berechenbar sein.

Die Berechnung kann beispielsweise von einer Recheneinheit 16 der Steuerung 5 erfolgen, und berechnete Steuerbefehle können in einer Speichereinheit 17 der Steuerung 5 abgelegt werden.

In einem Ansteuer-Betriebsmodus der Steuerung 5 können die Antriebe der Stützbeine 1, 2 des Abstützsystems mit der Abfolge an Steuerbefehlen zur Veränderung des vertikalen Aushebezustandes der Hebevorrichtung 9 relativ zum Untergrund 10 ansteuerbar sein, wobei mit der Abfolge an Steuerbefehlen eine sequentielle und zeitlich begrenzte Ansteuerung der Antriebe der Stützbeine 1, 2 des Abstützsystems 7 mit Steuerpulsen s1, s2, s3 erfolgen kann.

Dabei können in einer Speichereinheit 17 der Steuerung 5 abgelegte Steuerbefehle entsprechend der Abfolge von der Steuerung 5 ausgegeben werden.

Bei einer Ansteuerung der Antriebe der Stützbeine 1, 2 des Abstützsystems 7 kann allgemein eine Vergrößerung und/oder Verkleinerung der Längserstreckung der Stützbeine 1, 2 erfolgen.

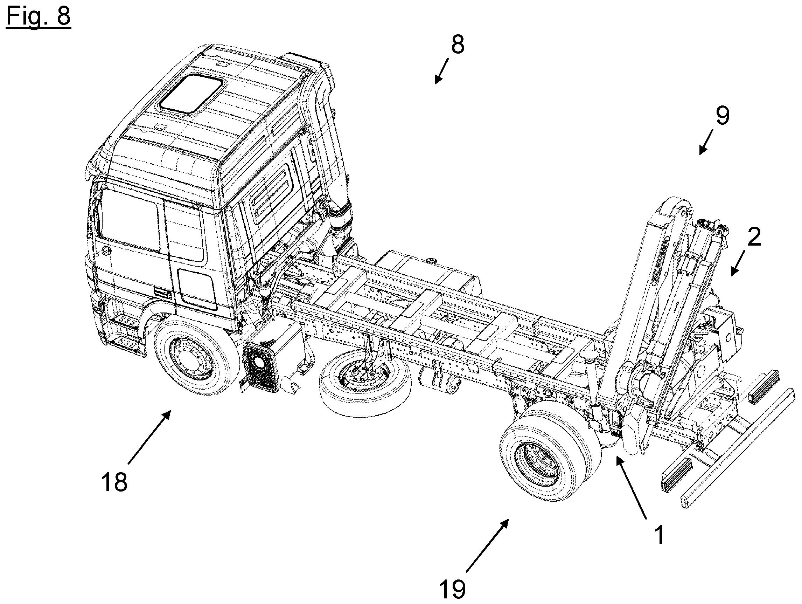

Figur 8 zeigt eine zur Ausführung der Figur 7 analoge, auf einem Trägerfahrzeug 8 mit Hebevorrichtung 9 angeordnete Abstützvorrichtung 7.

In den Figuren 9a bis 9d ist schematisch Ausheben mit einem Abstützsystem 7 (vgl. Figur 3 oder Figur 7) zur einer beispielhaft vorgegebenen Raumrichtung H (Horizontale) gezeigt. Das Abstützsystem 7 kann mit einem in dieser Figur nicht dargestellten Trägerfahrzeug und/oder einer Hebevorrichtung (Schwenkachse 15) verbunden sein.

Für die Erlaubbarkeit einer Durchführung eines Aushebe-Verfahrensschritts ii kann beispielsweise vorgegeben sein, dass die momentan erfasste Neigung α des Trägerfahrzeugs 8 und/oder der Hebevorrichtung 9 in einem Bereich von 0° bis 5° gegenüber der Horizontalen H liegt. Ein beispielhafter Bereich Δα für eine Neigungsabweichung der erfassten Neigung α von 5° gegenüber der Horizontalen H ist in den Figuren 9a bis 9d beidseitig der Horizontalen H eingezeichnet. Es kann also gefordert sein, dass die momentan erfasste Neigung α wie beispielhaft dargestellt für die Durchführung des Verfahrens zwischen +5° und -5° gegenüber der Horizontalen H liegt.

Die in den Figuren 9a bis 9d dargestellte Ausrichtung kann mit Bezug auf Figur 6 einer Nivellierung um eine Längsachse x und auch einer Nivellierung um eine Querachse y entsprechen. Ausrichtungen zu anderen Achsen oder Raumebenen können analog erfolgen.

Das Abstützsystem 7 weist zwei in der gezeigten Ausführung an längenveränderbaren Stützarmen 11, 12 angeordnete Stützbeine 1, 2 auf. Die Stützbeine 1, 2 sind in ihrer Längserstreckung längenveränderbar. Die in dieser Abfolge an Figuren zur Ausrichtung verwendeten Stützbeine 1, 2 weisen wie dargestellt unterschiedliche (einstellbare) Längserstreckungen x11, x12, x13, x21 und x22 auf. Ein Aushebezustand kann sich beispielsweise durch diese Längserstreckungen und/oder eine Abstandsmessung zum Untergrund 10 charakterisieren lassen.

Es soll nicht ausgeschlossen sein, dass anders als dargestellt das Abstützsystem 7 mehrere Stützbeine aufweist (beispielsweise vier) und dass zur Ausrichtung, insbesondere zu einer Raumebene, auch mehrere dieser Stützbeine herangezogen werden. Aus Darstellungsgründen ist der Ablauf jedoch auf zwei Stützbeine 1, 2 beschränkt.

Figur 9a zeigt ein auf einem geneigten Untergrund 10 abgestütztes Abstützsystem 7, wobei die Stützbeine 1, 2 in Kontakt mit dem Untergrund gebracht wurden. Die Blickrichtung kann einer Ansicht entlang einer Längsachse eines Trägerfahrzeugs entsprechen. Die Stützbeine 1, 2 weisen jeweils eine erste Längserstreckung x11, x21 auf. Der Neigungsmesser 6 gibt einen gegenüber der Horizontalen H gemessenen Neigungswinkel α von -2° aus.

Durch die Ansteuerung der Antriebe der Stützbeine 1 mit von der Steuerung 5 sequentiell ausgegebenen und zeitlich begrenzten Steuerpulsen s1, s2, s3 (siehe Figur 10a und 10b) kann ein Aushebezustand der Hebevorrichtung 9 inkrementell verändert werden, wie dargestellt vergrößert.

In einem Berechnungs-Verfahrensschritt i (siehe Figur 1) kann ausgehend von der jeweils gemessenen Neigung α eine Abfolge an Steuerbefehlen zur sequentiellen und zeitlich begrenzten Ansteuerung einzelner Antriebe der Stützbeine 1, 2 des Abstützsystems 7 zur Veränderung des Aushebezustandes unter Beibehaltung der Neigung α innerhalb eines Bereichs Δα für eine Neigungsabweichung berechnet werden. Eine teilweise Änderung des Aushebezustandes, wie dies von einer Figur der Figuren 9a bis 9d zur anderen beispielhaft dargestellt ist, kann ein Teil der insgesamt gewünschten oder benötigten Änderung des Aushebezustandes des Trägerfahrzeugs oder der Hebevorrichtung sein.

In Figur 9b weist das Stützbein 1 nach Ansteuerung durch die Steuerung 5 mit einem Steuerpuls s1 eine zweite, größere Längserstreckung x12 auf. Der Neigungsmesser 6 gibt einen gegenüber der Horizontalen H gemessenen Neigungswinkel α von 2° aus, die Neigung α ist also innerhalb des vorgegebenen Bereichs Δα für eine Neigungsabweichung beibehalten worden.

Dies kann beispielsweise einem ersten Durchlauf des Berechnungs-Verfahrensschritts i und des Aushebe-Verfahrensschritts ii entsprechen.

In Schleifen iii (siehe Figur 1) kann eine Wiederholung des Berechnungs-Verfahrensschritts i und des Aushebe-Verfahrensschritts ii erfolgen, wobei jeweils Steuerbefehle - und damit Steuerpulse und ggf. Überlappungen - für die Stützbeine 1, 2 berechnet werden und Ansteuerungen deren Antriebe mit Steuerpulsen erfolgen können.

In Figur 9c weist das Stützbein 2 nach einem Durchlauf der Schleife iii und dabei erfolgter Ansteuerung durch die Steuerung 5 mit einem Steuerpuls s2 eine zweite, größere Längserstreckung x22 auf. Der Neigungsmesser 6 gibt wieder einen gegenüber der Horizontalen H gemessenen Neigungswinkel α von -3° aus. Die Neigung α ist zwar relativ zur gezeigten Raumrichtung H wieder vergrößert worden, liegt jedoch immer noch im Bereich Δα für eine Neigungsabweichung.

Mit Bezug auf Figur 6 kann angemerkt werden, dass durch Änderung der Längserstreckungen der Stützbeine 1 und 2 auch eine Ausrichtung um die Längsachse x erfolgen kann. Durch die Längserstreckungen der Stützbeine 1, 2, kann ebenso eine Änderung der Neigung um die Querachse y erfolgen. In Bezug auf eine horizontale Raumebene kann die Neigung zu einer in dieser gelegenen Raumrichtung (beispielsweise orthogonal zur Raumrichtung H gesehen) auch innerhalb eines Bereichs für eine Neigungsabweichung beibehalten werden.

Zur weiteren Veränderung des Aushebezustands kann in weiteren Durchläufen der Schleife iii (siehe Figur 1) jeweils eine weitere Wiederholung des Berechnungs-Verfahrensschritts i und des Aushebe-Verfahrensschritts ii erfolgen, wobei bei jeder Wiederholung der Schleife iii eine Abfolge an Steuerbefehlen und entsprechenden Steuerpulsen, und ggf. Überlappungen von Steuerpulsen, zum Verändern des vertikalen Aushebezustandes im Wesentlichen unter Beibehaltung der momentanen Neigung α berechnet und die Abfolge an Steuerbefehlen umgesetzt werden kann.

In Figur 9d ist in einem weiteren Durchlauf der Schleife iii die Längserstreckung x13 des Stützbeins 1 inkrementell vergrößert worden. Der Neigungsmesser 6 gibt einen gegenüber der Horizontalen H gemessenen Neigungswinkel α von 0° aus.

In Figur 9d ist anhand der eingezeichneten Längserstreckungen x11, x13, x21, x22 der Stützbeine 1, 2 erkennbar, dass durch die Abfolge an Steuerbefehlen s1, s2, s3 eine im Wesentlichen gleiche Änderung der Längserstreckungen aller angesteuerten Stützbeine 1, 2 bewirkt wurde. Damit konnte eine Beibehaltung der momentanen Neigung α innerhalb eines vorgebbaren oder vorgegebenen Bereichs Δα für eine Neigungsabweichung erreicht werden.

Wenn die in einem Berechnungs-Verfahrensschritt i gegenwärtig erfasste Neigung α außerhalb des Bereichs Δα für eine Neigungsabweichung liegt, kann eine Nivellierung des Trägerfahrzeugs 8 und/oder der Hebevorrichtung 9 durch eine Ausführung zumindest eines wie zuvor beschriebenen Nivellierungs-Berechnungs-Verfahrensschritts v und zumindest eines wie zuvor beschriebenen Nivellierungs-Verfahrensschritts vi erfolgen.

Die Abfolge der Figuren 9c bis 9d kann wie beschrieben drei Wiederholungen der Schleife iii darstellen, bei welchen schrittweise die Längserstreckung der Stützbeine 1, 2 zum Verändern des vertikalen Aushebezustandes verändert wird.

Es ist jedoch auch denkbar, dass die Abfolge der Figuren 9c bis 9d einem einzelnen Durchlauf des Berechnungs-Verfahrensschritts i und des Aushebe-Verfahrensschritts ii entspricht. Dabei kann die Abfolge an Steuerbefehlen die Steuerpulse s1, s2, s3 umfassen.

Die Veränderung des vertikalen Aushebezustandes kann inkrementell so lange erfolgen
- bis der vertikale Aushebezustand des Trägerfahrzeugs 8 und/oder der Hebevorrichtung 9 einen vorgegebenen oder vorgebbaren Sollwert erreicht oder unterschreitet, oder
- so lange von einem Benutzer über eine Benutzerschnittstelle 21 einer Steuerung 5 ein Bedienbefehl zum Verändern des vertikalen Aushebezustandes abgegeben wird.

Die Figuren 10a und 10b zeigen jeweils eine schematische Darstellung dreier aufeinanderfolgender Steuerpulse s1, s2, s3 mit Pulsdauer t1, t2, t3 wobei die sequentiellen Steuerpulse s1, s2, s3 in Figur 10b eine zeitliche Überlappung d aufweisen.

Durch eine wie beispielsweise in den Figuren 9a bis 9d illustrierte Ansteuerung der Antriebe der Stützbeine 1 mit von der Steuerung 5 sequentiell ausgegebenen und zeitlich begrenzten Steuerpulsen s1, s2, s3 kann ein Verändern des vertikalen Aushebezustandes eines Trägerfahrzeugs 8 und/oder einer Hebevorrichtung 9 unter Beibehaltung der momentanen Neigung α innerhalb eines vorgebbaren oder vorgegebenen Bereichs Δα erfolgen.

In Figur 9b weist das Stützbein 1 nach Ansteuerung durch die Steuerung 5 mit einem ersten Steuerpuls s1 mit Pulsdauer t1 gegenüber der Darstellung in Figur 9a eine größere Längserstreckung x12 auf. In Figur 9c weist das Stützbein 2 nach Ansteuerung durch die Steuerung 5 mit einem zweiten Steuerpuls s2 mit Pulsdauer t2 gegenüber der Darstellung in Figur 9b eine größere Längserstreckung x22 auf. In Figur 9d weist das Stützbein 1 nach Ansteuerung durch die Steuerung 5 mit einem dritten Steuerpuls s3 mit Pulsdauer t3 gegenüber der Darstellung in Figur 9a größere Längserstreckung x12 auf. Die Ansteuerung kann beispielsweise mit Steuerpulsen s1, s2, s3 gemäß Figur 10a erfolgen.

In der Abfolge an Steuerbefehlen aufeinanderfolgende Steuerpulse s1, s2, s3 können von der Steuerung auch abschnittsweise, also für die Dauer einer Überlappung d, gleichzeitig ausgegeben werden.

Es kann also beispielsweise gemäß Figur 10b zunächst mit der Aktivierung eines Antriebs beispielsweise des Stützbeins 1 für die Pulsdauer t1 des Steuerpulses s1 begonnen werden. Vor Beendigung des laufenden Steuerpulses s1 kann bereits mit der Aktivierung des Antriebs des nächsten Stützbeins 2 mit der Ausgabe des gemäß der berechneten Abfolge sequentiell folgenden Steuerpulses s2 begonnen werden.

Die zeitlich begrenzte, vorgegebene oder vorgebbare Dauer der Überlappung d kann die Dauer einer abschnittsweise gleichzeitigen Aktivierung von Antrieben von Stützbeinen 1, 2 bestimmen.

### Bezugszeichenliste:

- 1: Stützbein
- 2: Stützbein
- 3: Stützbein
- 4: Stützbein
- 5: Steuerung
- 6: Neigungssensor
- 7: Abstützsystem
- 8: Trägerfahrzeug
- 9: Hebevorrichtung
- 10: Untergrund
- 11: Stützarm
- 12: Stützarm
- 13: Stützarm
- 14: Stützarm
- 15: Schwenkachse Kransäule
- 16: Recheneinheit
- 17: Speichereinheit
- 18: Vorderachse Trägerfahrzeug
- 19: Hinterachse Trägerfahrzeug
- 20: mobile Fernsteuerung
- 21: Benutzerschnittstelle
- α: Neigung
- Δα: Bereich für Neigungsabweichung
- i: Berechnungs-Verfahrensschritt
- ii: Aushebe-Verfahrensschritt
- iii: Wiederholungs-Schleife
- iv: Überwachungs-Verfahrensschritt
- v: Nivellierungs-Berechnungs-Verfahrensschritt
- vi: Nivellierungs-Verfahrensschritt
- vii: Wiederholungs-Schleife
- H: Horizontale
- x: Längsachse
- y: Querachse
- x11, x12, x13, x21, x22: Längserstreckung Stützbeine
- s1, s2, s3: Steerpuls
- t1, t2, t3: Pulsdauer
- d: Überlappung

## Patentansprüche

1. Verfahren zum Verändern des vertikalen Aushebezustandes eines auf einem Untergrund (10) abgestellten Trägerfahrzeugs (8) für eine Hebevorrichtung (9) mit einem Abstützsystem (7), wobei das Abstützsystem (7) zumindest
- vertikal in ihrer Längserstreckung verstellbare Stützbeine (1, 2, 3, 4) zur Abstützung auf dem Untergrund (10), und
- eine Steuerung (5) zur Ansteuerung von Antrieben der Stützbeine (1, 2, 3, 4) mit Steuerbefehlen umfasst
**dadurch gekennzeichnet, dass**
- in wenigstens einem Berechnungs-Verfahrensschritt (i) eine Abfolge an Steuerbefehlen zur sequentiellen und zeitlich begrenzten Ansteuerung der Antriebe der Stützbeine (1, 2, 3, 4) des Abstützsystems (7) zum Verändern des vertikalen Aushebezustandes unter Beibehaltung der momentanen Neigung (α) des Trägerfahrzeugs (8) und/oder der Hebevorrichtung (9) relativ zu zumindest einer vorgegebenen oder vorgebbaren Raumrichtung und/oder Raumebene innerhalb eines vorgebbaren oder vorgegebenen Bereichs (Δα) für eine Neigungsabweichung berechnet wird
- in wenigstens einem Aushebe-Verfahrensschritt (ii) eine Ansteuerung der Antriebe der Stützbeine (1, **2, 3,** 4) des Abstützsystems (7) mit der Abfolge an Steuerbefehlen zur Veränderung des vertikalen Aushebezustandes des Trägerfahrzeugs (8) und/oder der Hebevorrichtung (9) relativ zum Untergrund (10) erfolgt, wobei mit der Abfolge an Steuerbefehlen eine sequentielle und zeitlich begrenzte Ansteuerung der Antriebe der Stützbeine (1, 2, 3, 4) des Abstützsystems (7) mit Steuerpulsen (s1, s2, s3) erfolgt.

2. Verfahren nach Anspruch 1, wobei in einem Berechnungs-Verfahrensschritt (i) eine Berechnung der Abfolge an Steuerbefehlen auf Basis von wenigstens einem Parameter des Abstützsystems (7) erfolgt, wobei
- mit zumindest einem Neigungssensor (6) des Abstützsystems (7) zur Erfassung einer Neigung (α) des Trägerfahrzeugs (8) und/oder der Hebevorrichtung (9) relativ zu zumindest einer vorgegebenen oder vorgebbaren Raumrichtung und/oder Raumebene eine Erfassung einer momentanen Neigung (α) als ein Parameter des Abstützsystems (7) erfolgt und in einem Berechnungs-Verfahrensschritt (i) eine Berechnung der Abfolge an Steuerbefehlen auf Basis einer momentan erfassten Neigung (α) des Trägerfahrzeugs (8) und/oder der Hebevorrichtung (9) erfolgt, und/oder
- zumindest ein Parameter der Antriebe der Stützbeine (1, 2, 3, 4) als Parameter des Abstützsystems (7) vorgegeben oder vorgebbar ist und in einem Berechnungs-Verfahrensschritt (i) eine Berechnung der Abfolge an Steuerbefehlen auf Basis des zumindest einen Parameters der Antriebe der Stützbeine (1, 2, 3, 4) erfolgt, wobei vorzugsweise eine Hubrate und/oder eine Kolbenfläche eines als Hydraulikzylinders ausgebildeten Antriebs als ein Parameter der Antriebe der Stützbeine (1, 2, 3, 4) vorgegeben oder vorgebbar ist.

3. Verfahren nach dem vorangehenden Anspruch, wobei der wenigstens eine Parameter des Abstützsystems (7) zumindest einen der folgenden umfasst:
- Parameter der Antriebe der Stützbeine (1, 2, 3, 4), vorzugsweise Hubraten, Kolbendurchmesser, Kolbenflächen, Pumpleistung und/oder elektrische Leistung
- Parameter der Geometrie der Stützbeine (1, 2, 3, 4), vorzugsweise der vorherrschenden oder möglichen Längserstreckung (x11, x12, x13, x21, x22), oder einer Länge von Auslegerarmen mit Stutzbeinen (1, 2, 3, 4) des Abstützsystems (7)
- Parameter der Position der Stützbeine (1, 2, 3 ,4)
- der Anzahl Stützbeine (1, 2, 3, 4)
- eine mit zumindest einem Neigungssensor (6) des Abstützsystems (7) momentan erfasste Neigung (α) des Trägerfahrzeugs (8) und/oder der Hebevorrichtung (9), und/oder
- einen vorgebbaren oder vorgegebenen Bereich (Δα) für eine Neigungsabweichung
- eine aktuell vorgegebene, beispielsweise in einem vorangehenden Berechnungs-Verfahrensschritt (i) berechnete Pulsdauer (t1, t2, t3) eines Steuerpulses (s1, s2, s3)
- eine Anzahl und/oder Position von Achsen des Trägerfahrzeugs (8)
- eine Position einer auf dem Trägerfahrzeug (8) angeordneten Hebevorrichtung (9)
- eine Torsions- und Biegesteifigkeit und/oder eine Verwindung des Trägerfahrzeugs (8)
- eine vorgegebenen oder vorgebbaren Raumrichtung (H) und/oder Raumebene
- eine Position, insbesondere eine nominale Position, des Schwerpunkts des Trägerfahrzeugs (8) und/oder der Hebevorrichtung (9)
- eine auf ein Stützbein (1, 2, 3, 4) wirkende Belastung, vorzugsweise durch Erfassung eines Hydraulikdrucks in einem Antrieb eines Stützbeins (1, 2, 3, 4) und/oder durch einen Lastsensor
- zumindest einen Parameter der Ansteuerung der Antriebe der Stützbeine (1, 2, 3, 4), vorzugsweise ein Steuerverhalten von Hydraulikventilen der Hydraulikversorgung von hydraulischen Antrieben und/oder ein Schaltverhalten von Energieversorgungen von elektrischen Antrieben
- einen durch zumindest einen Abstandssensor des Abstützsystems (7) erfassten vertikalen Abstand des Trägerfahrzeugs (8) und/oder der Hebevorrichtung (9) relativ zu einem zur Abstützung verwendeten Untergrund (10)

4. Verfahren nach einem der vorangehenden Ansprüche, wobei
- in einem Berechnungs-Verfahrensschritt (i) für alle Antriebe der an der Abstützung beteiligten Stützbeine (1, 2, 3, 4) des Abstützsystems (7) eine Abfolge an Steuerbefehlen zur Veränderung des vertikalen Aushebezustandes des Trägerfahrzeugs (8) und/oder der Hebevorrichtung (9) berechnet wird
- in einem Aushebe-Verfahrensschritt (ii) zumindest eine Ansteuerung aller Antriebe der Stützbeine (1, 2, 3, 4) des Abstützsystems (7) mit der Abfolge an Steuerbefehlen zur Veränderung des vertikalen Aushebezustandes des Trägerfahrzeugs (8) und/oder der Hebevorrichtung (9) erfolgt.

5. Verfahren nach einem der vorangehenden Ansprüche, wobei mit einem Neigungssensor (6) des Abstützsystems (7) eine Erfassung einer Neigung (α) des Trägerfahrzeugs (8) und/oder der Hebevorrichtung (9) relativ zur Horizontalen (H) erfolgt und eine Durchführung eines Aushebe-Verfahrensschritts (ii) nur erfolgt, wenn die in einem Berechnungs-Verfahrensschritt (i) momentan erfasste Neigung (α) des Trägerfahrzeugs (8) und/oder der Hebevorrichtung (9) in einem vorgebbaren oder vorgegebenen Bereich (Δα) für eine Neigungsabweichung von 0° bis 10°, vorzugsweise innerhalb von 0° bis 5°, besonders bevorzugt innerhalb von 0° bis 3°, gegenüber der Horizontalen liegt.

6. Verfahren nach einem der vorangehenden Ansprüche, wobei in einer Schleife (iii) in einem Berechnungs-Verfahrensschritt (i), welcher auf einen zuvor durchgeführten Aushebe-Verfahrensschritt (ii) folgt, eine Erfassung der Änderung der Neigung (α) durch den vorangehenden Aushebe-Verfahrensschritt (ii) erfolgt.

7. Verfahren nach einem der vorangehenden Ansprüche, wobei die zeitlich begrenzte Ansteuerung der einzelnen Antriebe der Stützbeine (1, 2, 3, 4) des Abstützsystems (7) mit der Abfolge an Steuerbefehlen mit Steuerpulsen (s1, s2, s3) mit variabler Pulsdauer erfolgt, wobei vorzugsweise die Pulsdauer (t1, t2, t3) der Steuerpulse (s1, s2, s3) 0,05 Sekunden bis 3,50 Sekunden, vorzugsweise 0,25 Sekunden bis 1,5 Sekunden, beträgt.

8. Verfahren nach dem vorangehenden Anspruch, wobei eine Variation der Pulsdauer (t1, t2, t3) - und ggf. einer zeitlichen Überlappung (d) zwischen aufeinanderfolgenden Steuerpulsen (s1, s2, s3) - in Abhängigkeit von:
- Parametern der Antriebe der Stützbeine (1, 2, 3, 4) und/oder
- Parametern der Geometrie der Stützbeine (1, 2, 3, 4) und/oder
- Parametern der Position der Stützbeine (1, 2, 3, 4) und/oder
- der Anzahl Stützbeine (1, 2, 3, 4) und/oder
- der mit zumindest einem Neigungssensor (6) des Abstützsystems (7) momentan gemessenen Neigung (α) des Trägerfahrzeugs (8) und/oder der Hebevorrichtung (9), und/oder
- dem vorgebbaren oder vorgegebenen Bereich (Δα) für eine Neigungsabweichung und/oder
- der aktuell vorgegebenen Pulsdauer (t1, t2, t3) und/oder
- der Position von Achsen (18, 19) des Trägerfahrzeugs (8) und/oder
- der Position einer auf dem Trägerfahrzeug (8) angeordneten Hebevorrichtung (9) und/oder
- einer Torsions- und Biegesteifigkeit und/oder einer Verwindung des Trägerfahrzeugs (8) und/oder
- einer vorgegebenen oder vorgebbaren Raumrichtung und/oder Raumebene und/oder
- einer Position des Schwerpunkts des Trägerfahrzeugs (8) und/oder der Hebevorrichtung (9) und/oder
- einer durch Erfassung eines Hydraulikdrucks in einem Antrieb eines Stützbeins (1, 2, 3, 4) und/oder einer durch einen Lastsensor erfassten, auf ein Stützbein (1, 2, 3, 4) wirkenden Belastung
- zumindest einem Parameter der Ansteuerung der Antriebe der Stützbeine (1, 2, 3, 4), vorzugsweise einem Steuerverhalten von Hydraulikventilen der Hydraulikversorgung von hydraulischen Antrieben und/oder einem Schaltverhalten von Energieversorgungen von elektrischen Antrieben
erfolgt.

9. Verfahren nach einem der vorangehenden Ansprüche, wobei die Ansteuerung der Antriebe der einzelnen Stützbeine (1, 2, 3, 4) des Abstützsystems (7) mit der Abfolge an Steuerbefehlen in einer Ansteuerungssequenz in einer vorgebbaren oder vorgegebenen Reihenfolge erfolgt.

10. Verfahren nach einem der vorangehenden Ansprüche, wobei die Ansteuerung der einzelnen Antriebe der Stützbeine (1, 2, 3, 4) des Abstützsystems (7) mit der Abfolge an Steuerbefehlen mit Steuerpulsen (s1, s2, s3) mit einer zeitlich begrenzten, vorgegebenen oder vorgebbaren Überlappung (d) zwischen aufeinanderfolgenden Steuerpulsen (s1, s2, s3) erfolgt, wobei vorzugsweise innerhalb der Überlappung (d) zwischen aufeinanderfolgenden Steuerpulsen (s1, s2, s3) eine gleichzeitige Ansteuerung von maximal zwei Antrieben erfolgt.

11. Verfahren nach einem der vorangehenden Ansprüche, wobei mit zumindest einem Neigungssensor (6) des Abstützsystems (7) zur Erfassung einer Neigung (α) des Trägerfahrzeugs (8) und/oder der Hebevorrichtung (9) relativ zu zumindest einer vorgegebenen oder vorgebbaren Raumrichtung und/oder Raumebene eine Erfassung der momentanen Neigung (α) erfolgt und nach erfolgtem Verändern des vertikalen Aushebezustandes des Trägerfahrzeugs (8) und/oder der Hebevorrichtung (9) in einem Überwachungs-Verfahrensschritt (iv) eine fortlaufende Erfassung einer Neigung (α) des Trägerfahrzeugs (8) und/oder der Hebevorrichtung (9) relativ zu zumindest einer vorgegebenen oder vorgebbaren Raumrichtung und/oder Raumebene erfolgt.

12. Verfahren nach dem vorangehenden Anspruch, wobei bei Erreichen oder Überschreiten einer vorgegebenen oder vorgebbaren Abweichung der erfassten Neigung (α) zur Minimierung der Neigung (α) des Trägerfahrzeugs (8) und/oder der Hebevorrichtung (9)
- in einem Nivellierungs-Berechnungs-Verfahrensschritt (v) eine Abfolge an Steuerbefehlen zur sequentiellen und zeitlich begrenzten Ansteuerung einzelner Antriebe der Stützbeine (1, 2, 3, 4) des Abstützsystems (7) auf Basis einer momentan erfassten Neigung (α) des Trägerfahrzeugs (8) und/oder der Hebevorrichtung (9) berechnet wird
- in einem Nivellierungs-Verfahrensschritt (vi) eine Ansteuerung der Antriebe der Stützbeine (1, 2, 3, 4) des Abstützsystems (7) mit der Abfolge an Steuerbefehlen zur Verringerung der Neigung (α) des Trägerfahrzeugs (8) und/oder der Hebevorrichtung (9) relativ zu zumindest einer vorgegebenen oder vorgebbaren Raumrichtung und/oder Raumebene erfolgt, wobei mit der Abfolge an Steuerbefehlen eine sequentielle und zeitlich begrenzte Ansteuerung einzelner Antriebe der Stützbeine (1, 2, 3, 4) des Abstützsystems (7) mit Steuerpulsen erfolgt.

13. Computerprogrammprodukt, umfassend Befehle, welche bei einer Ausführung durch eine Recheneinheit einer Steuerung nach Anspruch 14 diese veranlassen, aus einer Speichereinheit, welche mit der Recheneinheit in einer Datenverbindung steht oder in eine solche bringbar ist, ein Verfahren nach einem der Ansprüche 1 bis 12 auszuführen.

14. Steuerung (5) für ein Abstützsystem (7) die zur Durchführung eines Verfahrens nach zumindest einem der Ansprüche 1 bis 12 ausgebildet ist, wobei von der Steuerung (5)
- in einem Berechnungs-Betriebsmodus eine Abfolge an Steuerbefehlen zur sequentiellen und zeitlich begrenzten Ansteuerung einzelner Antriebe der Stützbeine (1, 2, 3, 4) des Abstützsystems (7) zum Verändern des vertikalen Aushebezustandes unter Beibehaltung der momentanen Neigung (α) innerhalb eines vorgebbaren oder vorgegebenen Bereichs (Δα) für eine Neigungsabweichung berechenbar ist, und
- in einem Ansteuer-Betriebsmodus die Antriebe der Stützbeine (1, 2, 3, 4) des Abstützsystems mit der Abfolge an Steuerbefehlen zur Veränderung des vertikalen Aushebezustandes des Trägerfahrzeugs (8) und/oder der Hebevorrichtung (9) relativ zum Untergrund (10) ansteuerbar sind, wobei mit der Abfolge an Steuerbefehlen eine sequentielle und zeitlich begrenzte Ansteuerung der Antriebe der Stützbeine (1, 2, 3, 4) des Abstützsystems (7) mit Steuerpulsen erfolgt.

15. Fahrzeug, insbesondere Trägerfahrzeug (8) mit einer Hebevorrichtung (9), mit einem Abstützsystem (7) nach einem der Ansprüche 1 bis 12 und einer Steuerung (5) nach Anspruch 14.

## Claims

1. Method for changing the vertical lifted-out state of a carrier vehicle (8), parked on a piece of ground (10), for a lifting device (9) with a support system (7), wherein the support system (7) comprises at least
- supporting legs (1, 2, 3, 4), vertically adjustable in terms of their longitudinal extent, for supporting on the piece of ground (10), and
- a controller (5) for actuating drives of the supporting legs (1, 2, 3, 4) using control commands
**characterized in that**
- in at least one calculation method step (i) a sequence of control commands for the sequential and time-limited actuation of the drives of the supporting legs (1, 2, 3, 4) of the support system (7) is calculated for changing the vertical lifted-out state while maintaining the current inclination (α) of the carrier vehicle (8) and/or of the lifting device (9) relative to at least one predefined or predefinable spatial direction and/or spatial plane within a predefinable or predefined range (Δα) for an inclination deviation
- in at least one lift-out method step (ii) an actuation of the drives of the supporting legs (1, 2, 3, 4) of the support system (7) is effected using the sequence of control commands for changing the vertical lifted-out state of the carrier vehicle (8) and/or of the lifting device (9) relative to the piece of ground (10), wherein, using the sequence of control commands, a sequential and time-limited actuation of the drives of the supporting legs (1, 2, 3, 4) of the support system (7) is effected using control pulses (s1, s2, s3).

2. Method according to claim 1, wherein in a calculation method step (i) a calculation of the sequence of control commands is effected on the basis of at least one parameter of the support system (7), wherein
- a detection of a current inclination (α) as a parameter of the support system (7) is effected with at least one inclination sensor (6) of the support system (7) for the detection of an inclination (α) of the carrier vehicle (8) and/or of the lifting device (9) relative to at least one predefined or predefinable spatial direction and/or spatial plane, and in a calculation method step (i) a calculation of the sequence of control commands is effected on the basis of a currently detected inclination (α) of the carrier vehicle (8) and/or of the lifting device (9), and/or
- at least one parameter of the drives of the supporting legs (1, 2, 3, 4) is predefined or predefinable as a parameter of the support system (7), and in a calculation method step (i) a calculation of the sequence of control commands is effected on the basis of the at least one parameter of the drives of the supporting legs (1, 2, 3, 4), wherein preferably a lifting rate and/or a piston area of a drive formed as a hydraulic cylinder is predefined or predefinable as a parameter of the drives of the supporting legs (1, 2, 3, 4).

3. Method according to the preceding claim, wherein the at least one parameter of the support system (7) comprises at least one of the following:
- parameters of the drives of the supporting legs (1, 2, 3, 4), preferably lifting rates, piston diameters, piston areas, pumping power and/or electrical power
- parameters of the geometry of the supporting legs (1, 2, 3, 4), preferably the prevailing or possible longitudinal extent (x11, x12, x13, x21, x22), or a length of extension arms with supporting legs (1, 2, 3, 4) of the support system (7)
- parameters of the position of the supporting legs (1, 2, 3, 4)
- the number of supporting legs (1, 2, 3, 4)
- an inclination (α) of the carrier vehicle (8) and/or of the lifting device (9) currently detected with at least one inclination sensor (6) of the support system (7), and/or
- a predefinable or predefined range (Δα) for an inclination deviation
- a currently predefined pulse duration (t1, t2, t3) of a control pulse (s1, s2, s3), for example calculated in a preceding calculation method step (i),
- a number and/or position of axles of the carrier vehicle (8)
- a position of a lifting device (9) arranged on the carrier vehicle (8)
- a torsional and bending stiffness and/or a twisting of the carrier vehicle (8)
- a predefined or predefinable spatial direction (H) and/or spatial plane
- a position, in particular a nominal position, of the center of gravity of the carrier vehicle (8) and/or of the lifting device (9)
- a load acting on a supporting leg (1, 2, 3, 4), preferably by detection of a hydraulic pressure in a drive of a supporting leg (1, 2, 3, 4) and/or by a load sensor
- at least one parameter of the actuation of the drives of the supporting legs (1, 2, 3, 4), preferably a control behavior of hydraulic valves of the hydraulic supply system of hydraulic drives and/or a switching behavior of energy supply systems of electrical drives
- a vertical distance, detected by at least one distance sensor of the support system (7), of the carrier vehicle (8) and/or of the lifting device (9) relative to a piece of ground (10) used for the supporting.

4. Method according to one of the preceding claims, wherein
- in a calculation method step (i) a sequence of control commands for changing the vertical lifted-out state of the carrier vehicle (8) and/or of the lifting device (9) is calculated for all drives of the supporting legs (1, 2, 3, 4) of the support system (7) involved in the supporting
- in a lift-out method step (ii) at least one actuation of all drives of the supporting legs (1, 2, 3, 4) of the support system (7) is effected using the sequence of control commands for changing the vertical lifted-out state of the carrier vehicle (8) and/or of the lifting device (9).

5. Method according to one of the preceding claims, wherein a detection of an inclination (α) of the carrier vehicle (8) and/or of the lifting device (9) relative to the horizontal (H) is effected with an inclination sensor (6) of the support system (7) and a lift-out method step (ii) is carried out only if the inclination (α) of the carrier vehicle (8) and/or of the lifting device (9) currently detected in a calculation method step (i) is in a predefinable or predefined range (Δα) for an inclination deviation of from 0° to 10°, preferably within 0° to 5°, particularly preferably within 0° to 3°, with respect to the horizontal.

6. Method according to one of the preceding claims, wherein in a loop (iii), in a calculation method step (i) which follows a lift-out method step (ii) carried out beforehand, a detection of the change in the inclination (α) due to the preceding lift-out method step (ii) is effected.

7. Method according to one of the preceding claims, wherein the time-limited actuation of the individual drives of the supporting legs (1, 2, 3, 4) of the support system (7) using the sequence of control commands is effected using control pulses (s1, s2, s3) with variable pulse duration, wherein preferably the pulse duration (t1, t2, t3) of the control pulses (s1, s2, s3) is 0.05 seconds to 3.50 seconds, preferably 0.25 seconds to 1.5 seconds.

8. Method according to the preceding claim, wherein a variation of the pulse duration (t1, t2, t3) - and possibly of a temporal overlap (d) between successive control pulses (s1, s2, s3) - is effected depending on:
- parameters of the drives of the supporting legs (1, 2, 3, 4) and/or
- parameters of the geometry of the supporting legs (1, 2, 3, 4) and/or
- parameters of the position of the supporting legs (1, 2, 3, 4) and/or
- the number of supporting legs (1, 2, 3, 4) and/or
- the inclination (α) of the carrier vehicle (8) and/or of the lifting device (9) currently measured with at least one inclination sensor (6) of the support system (7), and/or
- the predefinable or predefined range (Δα) for an inclination deviation and/or
- the currently predefined pulse duration (t1, t2, t3) and/or
- the position of axles (18, 19) of the carrier vehicle (8) and/or
- the position of a lifting device (9) arranged on the carrier vehicle (8) and/or
- a torsional and bending stiffness and/or a twisting of the carrier vehicle (8) and/or
- a predefined or predefinable spatial direction and/or spatial plane and/or
- a position of the center of gravity of the carrier vehicle (8) and/or of the lifting device (9) and/or
- a load acting on a supporting leg (1, 2, 3, 4) and detected by detection of a hydraulic pressure in a drive of a supporting leg (1, 2, 3, 4) and/or a load acting on a supporting leg (1, 2, 3, 4) and detected by a load sensor
- at least one parameter of the actuation of the drives of the supporting legs (1, 2, 3, 4), preferably a control behavior of hydraulic valves of the hydraulic supply system of hydraulic drives and/or a switching behavior of energy supply systems of electrical drives.

9. Method according to one of the preceding claims, wherein the actuation of the drives of the individual supporting legs (1, 2, 3, 4) of the support system (7) using the sequence of control commands is effected in an actuation sequence in a predefinable or predefined order.

10. Method according to one of the preceding claims, wherein the actuation of the individual drives of the supporting legs (1, 2, 3, 4) of the support system (7) using the sequence of control commands is effected using control pulses (s1, s2, s3) with a time-limited, predefined or predefinable overlap (d) between successive control pulses (s1, s2, s3), wherein preferably within the overlap (d) between successive control pulses (s1, s2, s3), a simultaneous actuation of at most two drives is effected.

11. Method according to one of the preceding claims, wherein a detection of the current inclination (α) is effected with at least one inclination sensor (6) of the support system (7) for the detection of an inclination (α) of the carrier vehicle (8) and/or of the lifting device (9) relative to at least one predefined or predefinable spatial direction and/or spatial plane, and after changing of the vertical lifted-out state of the carrier vehicle (8) and/or of the lifting device (9) has been effected a continuous detection of an inclination (α) of the carrier vehicle (8) and/or of the lifting device (9) relative to at least one predefined or predefinable spatial direction and/or spatial plane is effected in a monitoring method step (iv).

12. Method according to the preceding claim, wherein when the detected inclination (α) reaches or exceeds a predefined or predefinable deviation, to minimize the inclination (α) of the carrier vehicle (8) and/or of the lifting device (9)
- in a leveling calculation method step (v) a sequence of control commands for the sequential and time-limited actuation of individual drives of the supporting legs (1, 2, 3, 4) of the support system (7) is calculated on the basis of a currently detected inclination (α) of the carrier vehicle (8) and/or of the lifting device (9)
- in a leveling method step (vi) an actuation of the drives of the supporting legs (1, 2, 3, 4) of the support system (7) is effected using the sequence of control commands for reducing the inclination (α) of the carrier vehicle (8) and/or of the lifting device (9) relative to at least one predefined or predefinable spatial direction and/or spatial plane, wherein, using the sequence of control commands, a sequential and time-limited actuation of individual drives of the supporting legs (1, 2, 3, 4) of the support system (7) is effected using control pulses.

13. Computer program product comprising commands which, when executed by a computing unit of a controller according to claim 14, prompt the latter to execute a method according to one of claims 1 to 12 from a storage unit which is in or can be brought into data connection with the computing unit.

14. Controller (5) for a support system (7) which is formed for carrying out a method according to at least one of claims 1 to 12, wherein by the controller (5)
- in a calculation operating mode a sequence of control commands for the sequential and time-limited actuation of individual drives of the supporting legs (1, 2, 3, 4) of the support system (7) is calculable for changing the vertical lifted-out state while maintaining the current inclination (α) within a predefinable or predefined range (Δα) for an inclination deviation, and
- in an actuation operating mode the drives of the supporting legs (1, 2, 3, 4) of the support system are actuatable using the sequence of control commands for changing the vertical lifted-out state of the carrier vehicle (8) and/or of the lifting device (9) relative to the piece of ground (10), wherein, using the sequence of control commands, a sequential and time-limited actuation of the drives of the supporting legs (1, 2, 3, 4) of the support system (7) is effected using control pulses.

15. Vehicle, in particular carrier vehicle (8) with a lifting device (9), with a support system (7) according to one of claims 1 to 12 and a controller (5) according to claim 14.

## Revendications

1. Procédé de modification de l'état relevé vertical d'un véhicule porteur (8) stationné sur un sol (10) pour un dispositif de levage (9) avec un système d'appui (7), dans lequel le système d'appui (7) comprend au moins
- des pieds de support (1, 2, 3, 4) pouvant être ajustés verticalement dans leur extension longitudinale pour prendre appui sur le sol (10), et
- une commande (5) destinée à piloter des entraînements des pieds de support (1, 2, 3, 4) avec des instructions de commande,
**caractérisé en ce que**
- dans au moins une étape de procédé de calcul (i), une séquence d'instructions de commande pour le pilotage séquentiel et limité dans le temps des entraînements des pieds de support (1, 2, 3, 4) du système d'appui (7) pour modifier l'état relevé vertical tout en maintenant l'inclinaison instantanée (α) du véhicule porteur (8) et/ou du dispositif de levage (9) par rapport à au moins une direction spatiale et/ou un plan spatial prédéfinis ou pouvant être prédéfinis à l'intérieur d'une plage pouvant être prédéfinie ou prédéfinie (Δα) pour un écart d'inclinaison est calculée
- dans au moins une étape du procédé de relevage (ii), un pilotage des entraînements des pieds de support (1, 2, 3, 4) du système d'appui (7) est effectué avec la séquence d'instructions de commande pour modifier l'état relevé vertical du véhicule porteur (8) et/ou du dispositif de levage (9) par rapport au sol (10), dans lequel un pilotage séquentiel et limité dans le temps des entraînements des pieds de support (1, 2, 3, 4) du système d'appui (7) avec des impulsions de commande (s1, s2, s3) est effectué avec la séquence d'instructions de commande.

2. Procédé selon la revendication 1, dans lequel, dans une étape de procédé de calcul (i), un calcul de la séquence d'instructions de commande est effectué sur la base d'au moins un paramètre du système d'appui (7), dans lequel
- une détection d'une inclinaison instantanée (α) en tant qu'un paramètre du système d'appui (7) est effectuée avec au moins un capteur d'inclinaison (6) du système d'appui (7) pour la détection d'une inclinaison (α) du véhicule porteur (8) et/ou du dispositif de levage (9) par rapport à au moins une direction spatiale et/ou un plan spatial prédéfinis ou pouvant être prédéfinis, et, dans une étape de procédé de calcul (i), un calcul de la séquence d'instructions de commande est effectué sur la base d'une inclinaison (α) instantanément détectée du véhicule porteur (8) et/ou du dispositif de levage (9), et/ou
- au moins un paramètre des entraînements des pieds de support (1, 2, 3, 4) est prédéfini ou peut être prédéfini en tant que paramètre du système d'appui (7) et dans une étape de procédé de calcul (i), un calcul de la séquence d'instructions de commande est effectué sur la base de l'au moins un paramètre des entraînements des pieds de support (1, 2, 3, 4), dans lequel, de préférence, une vitesse de course et/ou une surface de piston d'un entraînement réalisé en tant que vérin hydraulique sont prédéfinies ou peuvent être prédéfinies en tant qu'un paramètre des entraînements des pieds de support (1, 2, 3, 4).

3. Procédé selon la revendication précédente, dans lequel l'au moins un paramètre du système d'appui (7) comprend au moins un des éléments suivants :
- des paramètres des entraînements des pieds de support (1, 2, 3, 4), de préférence des vitesses de course, les diamètres de piston, les surfaces de piston, la puissance de pompage et/ou la puissance électrique
- des paramètres de la géométrie des pieds de support (1, 2, 3, 4), de préférence l'extension longitudinale prédominante ou possible (x11, x12, x13, x21, x22), ou d'une longueur de flèches avec des pieds de support (1, 2, 3, 4) du système d'appui (7)
- des paramètres de la position des pieds de support (1, 2, 3, 4)
- le nombre de pieds de support (1, 2, 3, 4)
- une inclinaison (α) instantanément détectée avec au moins un capteur d'inclinaison (6) du système d'appui (7) du véhicule porteur (8) et/ou du dispositif de levage (9), et/ou
- une plage (Δα) pouvant être prédéfinie ou prédéfinie pour un écart d'inclinaison
- une durée d'impulsion (t1, t2, t3) d'une impulsion de commande (s1, s2, s3) prédéfinie actuellement, calculée par exemple dans une étape de procédé de calcul (i) précédente
- un nombre et/ou une position d'essieux du véhicule porteur (8)
- une position d'un dispositif de levage (9) disposé sur le véhicule porteur (8)
- une rigidité en torsion et en flexion et/ou une torsion du véhicule porteur (8)
- une direction spatiale (H) et/ou un plan spatial prédéfinis ou pouvant être prédéfinis
- une position, en particulier une position nominale, du centre de gravité du véhicule porteur (8) et/ou du dispositif de levage (9)
- une contrainte agissant sur un pied de support (1, 2, 3, 4), de préférence par détection d'une pression hydraulique dans un entraînement d'un pied de support (1, 2, 3, 4) et/ou par un capteur de charge
- au moins un paramètre de pilotage des entraînements des pieds de support (1, 2, 3, 4), de préférence un comportement de commande de soupapes hydrauliques de l'alimentation hydraulique d'entraînements hydrauliques et/ou un comportement de commutation d'alimentations en énergie d'entraînements électriques
- une distance verticale du véhicule porteur (8) et/ou du dispositif de levage (9) détectée par au moins un capteur de distance du système d'appui (7) par rapport à un sol (10) utilisé pour l'appui.

4. Procédé selon l'une quelconque des revendications précédentes, dans lequel
- dans une étape de procédé de calcul (i) pour tous les entraînements des pieds de support (1, 2, 3, 4) du système d'appui (7) participant à l'appui, une séquence d'instructions de commande est calculée pour modifier l'état relevé vertical du véhicule porteur (8) et/ou du dispositif de levage (9)
- dans une étape de procédé de relevage (ii), au moins un pilotage de tous les entraînements des pieds de support (1, 2, 3, 4) du système d'appui (7) est effectué avec la séquence d'instructions de commande pour modifier l'état relevé vertical du véhicule porteur (8) et/ou du dispositif de levage (9).

5. Procédé selon l'une quelconque des revendications précédentes, dans lequel une détection d'une inclinaison (α) du véhicule porteur (8) et/ou du dispositif de levage (9) par rapport à l'horizontale (H) est réalisée avec un capteur d'inclinaison (6) du système d'appui (7) et une étape de procédé de relevage (ii) est seulement mise en œuvre lorsque l'inclinaison (α) momentanément détectée dans une étape de procédé de calcul, (i) du véhicule porteur (8) et/ou du dispositif de levage (9) se situe dans une plage (Δα) pouvant être prédéfinie ou prédéfinie pour un écart d'inclinaison de 0° à 10°, de préférence de 0° à 5°, de manière particulièrement préférée de 0° à 3°, par rapport à l'horizontale.

6. Procédé selon l'une quelconque des revendications précédentes, dans lequel dans une boucle (iii) dans une étape de procédé de calcul (1) qui suit une étape de procédé de relevage (ii) mise en œuvre auparavant, une détection de la modification de l'inclinaison (α) par l'étape précédente du procédé de relevage (ii) être effectuée.

7. Procédé selon l'une quelconque des revendications précédentes, dans lequel le pilotage limité dans le temps des entraînements individuels des pieds de support (1, 2, 3, 4) du système d'appui (7) est effectué avec la séquence d'instructions de commande avec des impulsions de commande (s1, s2, s3) avec une durée d'impulsion variable, dans lequel de préférence la durée d'impulsion (t1, t2, t3) des impulsions de commande (s1, s2, s3) va de 0,05 seconde à 3,50 secondes, de préférence de 0,25 seconde à 1,5 seconde.

8. Procédé selon la revendication précédente, dans lequel une variation de la durée d'impulsion (t1, t2, t3) - et, le cas échéant, d'un chevauchement temporel (d) entre des impulsions de commande (s1, s2, s3) successives - est effectuée en fonction :
- de paramètres des entraînements des pieds de support (1, 2, 3, 4) et/ou
- de paramètres de la géométrie des pieds de support (1, 2, 3, 4) et/ou
- de paramètres de la position des pieds de support (1, 2, 3, 4) et/ou
- du nombre de pieds de support (1, 2, 3, 4) et/ou
- de l'inclinaison (α) momentanément mesurée avec au moins un capteur d'inclinaison (6) du système d'appui (7) du véhicule porteur (8) et/ou du dispositif de levage (9), et/ou
- de la plage (Δα) pouvant être prédéfinie ou prédéfinie pour un écart d'inclinaison et/ou
- de la durée d'impulsion (t1, t2, t3) prédéfinie actuellement et/ou
- de la position des essieux (18, 19) du véhicule porteur (8) et/ou
- de la position d'un dispositif de levage (9) disposé sur le véhicule porteur (8) et/ou
- d'une rigidité en torsion et en flexion et/ou d'une torsion du véhicule porteur (8) et/ou
- d'une direction spatiale et/ou d'un plan spatial prédéfinis ou pouvant être prédéfinis et/ou
- d'une position du centre de gravité du véhicule porteur (8) et/ou du dispositif de levage (9) et/ou
- d'une contrainte agissant sur un pied de support (1, 2, 3, 4) détectée dans un entraînement d'un pied de support (1, 2, 3, 4) par détection d'une pression hydraulique et/ou détectée par un capteur de charge
- d'au moins un paramètre du pilotage des entraînements des pieds de support (1, 2, 3, 4), de préférence d'un comportement de commande de soupapes hydrauliques de l'alimentation hydraulique d'entraînements hydrauliques et/ou d'un comportement de commutation d'alimentations en énergie d'entraînements électriques.

9. Procédé selon l'une quelconque des revendications précédentes, dans lequel le pilotage des entraînements des différents pieds de support (1, 2, 3, 4) du système d'appui (7) est effectué avec la séquence d'instructions de commande dans une séquence de pilotage dans un ordre pouvant être prédéfini ou prédéfini.

10. Procédé selon l'une quelconque des revendications précédentes, dans lequel le pilotage des différents entraînements des pieds de support (1, 2, 3, 4) du système d'appui (7) est effectué avec la séquence d'instructions de commande avec des impulsions de commande (s1, s2, s3) avec un chevauchement (d) limité dans le temps prédéfini ou pouvant être prédéfini entre des impulsions de commande (s1, s2, s3) successives, dans lequel de préférence un pilotage simultané de deux entraînements au maximum est effectué à l'intérieur du chevauchement (d) entre des impulsions de commande (s1, s2, s3) successives.

11. Procédé selon l'une quelconque des revendications précédentes, dans lequel une détection de l'inclinaison (α) instantanée est effectuée avec au moins un capteur d'inclinaison (6) du système d'appui (7) pour la détection d'une inclinaison (α) du véhicule porteur (8) et/ou du dispositif de levage (9) par rapport à au moins une direction spatiale et/ou un plan spatial prédéfinis ou pouvant être prédéfinis et, après la réalisation de la modification de l'état relevé vertical du véhicule porteur (8) et/ou du dispositif de levage (9), une détection continue d'une inclinaison (α) du véhicule porteur (8) et/ou du dispositif de levage (9) par rapport à au moins une direction spatiale et/ou un plan spatial prédéfinis ou pouvant être prédéfinis est effectuée dans une étape de procédé de surveillance (iv).

12. Procédé selon la revendication précédente, dans lequel, en cas d'atteinte ou de dépassement d'un écart prédéfini ou pouvant être prédéfini de l'inclinaison (α) détectée pour minimiser l'inclinaison (α) du véhicule porteur (8) et/ou du dispositif de levage (9),
- dans une étape de procédé de calcul de nivellement (v), une séquence d'instructions de commande pour le pilotage séquentiel et limité dans le temps de différents entraînements des pieds de support (1, 2, 3, 4) du système d'appui (7) est calculée sur la base d'une inclinaison (α) instantanément détectée du véhicule porteur (8) et/ou du dispositif de levage (9)
- ans une étape de procédé de nivellement (vi) un pilotage des entraînements des pieds de support (1, 2, 3, 4) du système d'appui (7) est effectué avec la séquence d'ordres de commande pour réduire l'inclinaison (α) du véhicule porteur (8) et/ou du dispositif de levage (9) par rapport à au moins une direction spatiale et/ou un plan spatial prédéfinis ou pouvant être prédéfinis, dans lequel un pilotage séquentiel et limité dans le temps de différents entraînements des pieds de support (1, 2, 3, 4) du système d'appui (7) avec des impulsions de commande est effectué avec la séquence d'instructions de commande.

13. Produit-programme d'ordinateur comprenant des instructions, qui, lors d'une exécution par au moins une unité de calcul d'une commande selon la revendication 14, l'amènent à exécuter un procédé selon l'une quelconque des revendications 1 à 12 à partir d'au moins une unité de stockage, laquelle est en liaison de données ou peut être amenée en liaison de données avec l'unité de calcul.

14. Commande (5) pour un système d'appui (7), qui est réalisée pour mettre en œuvre un procédé selon au moins l'une quelconque des revendications 1 à 12, dans laquelle la commande (5)
- peut calculer, dans un mode de fonctionnement de calcul, une séquence d'instructions de commande pour le pilotage séquentiel et limité dans le temps de différents entraînements des pieds de support (1, 2, 3, 4) du système d'appui (7) pour modifier l'état relevé vertical tout en maintenant l'inclinaison (α) instantanée dans une plage (Δα) pouvant être prédéfinie ou prédéfinie pour un écart d'inclinaison, et
- dans un mode de fonctionnement de pilotage, les entraînements des pieds de support (1, 2, 3, 4) du système d'appui peuvent être pilotés avec la séquence d'instructions de commande pour modifier l'état relevé vertical du véhicule porteur (8) et/ou du dispositif de levage (9) par rapport au sol (10), dans laquelle un pilotage séquentiel et limité dans le temps des entraînements des pieds de support (1, 2, 3, 4) du système d'appui (7) avec des impulsions de commande est effectué avec la séquence d'instructions de commande.

15. Véhicule, en particulier véhicule porteur (8) avec un dispositif de levage (9), avec un système d'appui (7) selon l'une quelconque des revendications 1 à 12 et une commande (5) selon la revendication 14.
